(19) Europäisches Patentamt / European Patent Office / Office européen des brevets

(11) **EP 2 938 436 B1**

(12) **EUROPEAN PATENT SPECIFICATION**

(45) Date of publication and mention of the grant of the patent:
**16.01.2019 Bulletin 2019/03**

(51) Int Cl.:
***B01L 3/00*** *(2006.01)*     ***G01N 1/31*** *(2006.01)*
***G01N 35/00*** *(2006.01)*     ***G01N 35/10*** *(2006.01)*

(21) Application number: **13814544.6**

(22) Date of filing: **20.12.2013**

(86) International application number:
**PCT/EP2013/077559**

(87) International publication number:
**WO 2014/102161 (03.07.2014 Gazette 2014/27)**

(54) **SPECIMEN PROCESSING SYSTEMS AND METHODS FOR MODERATING EVAPORATION**

PROBENVERARBEITUNGSSYSTEME UND VERFAHREN ZUR MÄSSIGUNG VON VERDAMPFUNG

SYSTÈMES ET PROCÉDÉS DE TRAITEMENT D'ÉCHANTILLONS PERMETTANT DE MODÉRER L'ÉVAPORATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2012 US 201261746087 P**
           **15.03.2013 US 201361794757 P**

(43) Date of publication of application:
**04.11.2015 Bulletin 2015/45**

(73) Proprietor: **Ventana Medical Systems, Inc.**
**Tucson, Arizona 85755 (US)**

(72) Inventors:
- **ASHBY, Austin Micheil**
  **Tucson, Arizona 85743 (US)**
- **BARNES, Bryan**
  **Marana, Arizona 85658 (US)**
- **GROLL, Henning**
  **Tucson, Arizona 85737 (US)**
- **JONES, Jessica**
  **Oro Valley, Arizona 85737 (US)**
- **KRAM, Brian Howard**
  **Tucson, Arizona 85739 (US)**
- **MARSHALL, Kevin David**
  **Tucson, Arizona 85750 (US)**
- **PANG, Lizhen**
  **Tucson, Arizona 85718 (US)**

(74) Representative: **Herzog, Fiesser & Partner Patentanwälte PartG mbB**
**Dudenstrasse 46**
**68167 Mannheim (DE)**

(56) References cited:
| | |
|---|---|
| **WO-A1-2011/060387** | **WO-A1-2011/139978** |
| **WO-A2-2010/074915** | **US-A- 5 281 516** |
| **US-A- 5 338 358** | **US-A1- 2006 019 302** |
| **US-A1- 2006 148 063** | **US-A1- 2010 031 757** |
| **US-A1- 2011 305 842** | |

EP 2 938 436 B1

Description

TECHNICAL FIELD

This disclosure relates to systems for preparing specimens for analysis. In particular, the disclosure relates to specimen processing systems and methods of processing specimens.

BACKGROUND

A wide variety of techniques have been developed to prepare and analyze biological specimens. Example techniques include microscopy, microarray analyses (e.g., protein and nucleic acid microarray analyses), and mass spectrometric methods. Specimens are prepared for analysis by applying one or more liquids to the specimens. If a specimen is treated with multiple liquids, both the application and the subsequent removal of each of the liquids can be important for producing samples suitable for analysis.

WO 2011/060387 A1 discloses a slide processing apparatus, comprising a slide placed on a slide holder platen comprising a heater and an opposable element held by an opposable actuator.

US 2010/031757 A1 presents a handling device for a sample comprising a base part, a cover part, a first force generating unit adapted to generate an attracting force promoting attraction between the base part and the cover part, a second force generating unit adapted to generate a counterforce, and a control unit adapted for controlling the second force generating unit for influencing a sample space between the base part and the cover part for accommodating the sample.

WO 2011/139978 A1 describes an automated staining apparatus comprising an opposable element and a mixing extension. The opposable element is moved over a slide to move a band of liquid using capillary action. Herein, the opposable element has a lowered portion in the middle such that the height of the capillary gap is smaller, thus promoting lateral mixing.

US 5,281,516 A presents an apparatus and a method for performing automated sample preparation. Herein, the apparatus comprises heat-sinking, flat carriers for holding specimens and reagents, devices for heating and cooling and maintaining the specimen to or at any given temperature for any given time periods, and a computer to generate signals that control the temperatures and times.

US 5,338,358 A discloses an apparatus for dyeing tissues for observing immunoreaction having a dyeing tray with a plurality of plateaus arranged in parallel position. A slide is placed over each plateau that a wedge-shaped gap of capillary dimension is formed between the plateau and the undersurface of the slide to which the tissue is attached. A liquid drip surface and a liquid discharge port are formed at one end of the top surface of each plateau. A liquid delivery port is formed on a side wall of the tray so as to communicate with the liquid discharge port. The liquid delivery port and the drip surface are always exposed. A dyeing liquid or a rinsing liquid is dripped onto the exposed drip surface and spreads into the gap for dyeing the tissue or rinse the relevant parts. After the dyeing or rinsing, the used liquid is sucked and discharged by way of the liquid delivery port.

US 2006/019302 A1 presents a method and an apparatus of contacting a biological sample with a solution. Herein, the method comprises the steps of moving a curved surface wetted with the solution in proximity to the biological sample whereby the distance separating the wetted curved surface and the biological sample is sufficient to form a moving liquid meniscus layer between the two. The apparatus comprises a platform for supporting a microscope slide having a biological sample thereon; a translating cap having a curved lower surface positioned above the platform and being in proximity to a biological sample when in operation; means for moving the translating cap back and forth over the biological sample; and means for applying and removing liquid to and from the cap.

US 2011/305842 A1 presents a slide processing apparatus adapted to deliver a substance to a mounting surface of a slide carrying the specimen, wherein the substance is contacted with an opposable element held by an opposable holder device. The opposable element is pulled towards the slide by the substance which can spread along the mounting surface as the opposable element is flattened.

WO 2010/074915 A2 describes automatic replenishing of an evaporated reagent held within a capillary gap between a slide and a cover. Herein, the frequency of replenishing can be increased or decreased depending on details of a particular reaction or processing method, such as the temperature.

US 2006/148063 A1 discloses a method and an apparatus for continuous workflow processing of biological samples. The apparatus may include a probe for dispensing one or more reagents from one or more reagent containers onto one or more biological sample carriers. The method and apparatus includes processing each biological sample according to a respective sequence of protocol steps which may be ordered by a scheduler protocol.

Microscope slides bearing biological specimens, e.g., tissue sections or cells, are often treated with one or more dyes or reagents to add color and contrast to otherwise transparent or invisible cells or cell components. Specimens can be prepared for analysis by manually applying dyes or other reagents to specimen-bearing slides. This labor-intensive process often results in inconsistent processing due to individual techniques among laboratory technicians.

"Dip and dunk" automated machines immerse specimens in liquids by a technique similar to manual immersing techniques. These automated machines can process specimens in batches by submerging racks carrying microscope slides in open baths. Unfortunately, carryover of liquids between containers leads to contamination and degradation of the processing liquids. Worse, cells sloughing off the specimen carrying slides can cause contamination of other slides in the liquid baths. These types of processes also utilize excessive volumes of liquids, resulting in relatively high processing costs when the reagents must be changed to reduce the possibility of specimen cross-contamination. Open containers are also prone to evaporative losses and reagent oxidative degradation that may significantly alter the concentration and effectiveness of the reagents, resulting in inconsistent processing. It may be difficult to process samples without producing significant volumes of waste that may require special handling and disposal.

Immunohistochemical and in situ hybridization staining processes are often used to prepare tissue specimens. The rate of immunohistochemical and in situ hybridization staining of sectioned fixed tissue on a microscope slide is limited by the speed at which molecules (e.g., conjugating biomolecules) can diffuse into the fixed tissue from an aqueous solution placed in direct contact with the tissue section. Tissue is often "fixed" immediately after excision by placing it in a 10% solution of formaldehyde, which preserves the tissue from autocatalytic destruction by cross-linking much of the protein via methylene bridges. This cross-linked tissue may present many additional barriers to diffusion, including the lipid bilayer membranes that enclose individual cells and organelles. Conjugate biomolecules (antibody or DNA probe molecules) can be relatively large, ranging in size from a few kilodaltons to several hundred kilodaltons, which constrains them to diffuse slowly into solid tissue with typical times for sufficient diffusion being in the range of several minutes to a few hours. Typical incubation conditions are 30 minutes at 37 degrees centigrade. The stain rate is often driven by a concentration gradient so the stain rate can be increased by increasing the concentration of the conjugate in the reagent to compensate for slow diffusion. Unfortunately, conjugates are often very expensive, so increasing their concentration is wasteful and often not economically viable. Additionally, the excessive amount of conjugate that is driven into the tissue, when high concentrations are used, is entrapped in the tissue, is difficult to rinse out, and causes high levels of non-specific background staining. In order to reduce the noise due to non-specific background staining and increase the signal of specific staining, low concentrations of conjugate with long incubation times are often used to allow the conjugate to bind only to the specific sites.

Histology staining instruments often use relatively large volumes of reagent (100 μL) in a puddle of typically 300 μL of buffer. Some conventional instruments mix the reagent by alternating tangential air jets onto an overlaying oil layer that rotates and counter-rotates when contacted by the alternating air jets, thereby imparting motion into the underlying aqueous puddle. This mixing is slow and not particularly vigorous, and it can create significant evaporation losses, especially at the elevated temperatures that are often necessary. Large volumes of rinse liquid are used to physically displace the large puddles of reagents, which are covered with oil. This rinsing procedure produces large volumes of waste liquid, which may be hazardous waste.

## OVERVIEW OF TECHNOLOGY

A slide processing apparatus for processing a specimen carried by a slide includes a staining module. The staining module includes a slide holder platen, an opposable element, and an opposable actuator. The slide holder platen has a first sidewall, a second sidewall, and a slide receiving region between the first sidewall and the second sidewall. A slide is positioned on the slide receiving region. The slide includes a first edge and an opposing second edge. The opposable element is disposed proximate to the slide and includes a first edge portion and an opposing second edge portion. The opposable actuator holds the opposable element to form a capillary gap between the opposable element and the slide. The first edge portion of the opposable element is closer to the first sidewall than the first edge of the slide. The second edge portion of the opposable element is closer to the second sidewall than the second edge of the slide.

The slide processing apparatus may include a dispenser positioned to deliver a supplemental liquid between the opposable element and the slide while a liquid is held in the gap there between. Additionally, the slide processing apparatus can include a controller communicatively coupled to the dispenser and programmed to command the dispenser such that the dispenser delivers the supplemental liquid to keep a volume of liquid between the opposable element and the slide within an equilibrium volume range. Herein, the controller may be programmed to deliver supplemental liquid at a predetermined rate. Herein, the predetermined rate may be equal to or less than about 110 μL per minute at a temperature of about 37°C for bulk liquids. Herein, the predetermined rate is equal to or less than about 7 μL per minute at a temperature of about 37°C for non-bulk reagents. The rate can be selected based on the specimen staining protocol being processed.

The slide processing apparatus may further comprise a plurality of additional staining modules and a controller configured to independently control each of the staining modules. The staining modules can use disposable or reusable opposable elements to spread and move reagents across the specimens.

The first edge portion of the opposable element can extend past the first edge of the slide towards the first sidewall. The second edge portion of the opposable element can extend past the second edge of the slide towards the second sidewall. The opposable element can include a mounting end having at least one slot dimensioned to be received and retained by at least a portion of the opposable actuator.

The staining module can include at least one heating element positioned to conductively heat the first sidewall, the second sidewall, or both. The opposable actuator is moveable to roll a curved portion of the opposable element along the slide to move a band of a liquid across at least a portion of the slide carrying a specimen. The first and second sidewalls can be used to heat the slide, specimen, and/or liquid while the band of liquid is manipulated across the specimen.

The slide processing apparatus can include a contact surface of the slide receiving region that supports a slide such that the edge portions of the slide extend outwardly from edges of the opposable.

A system for processing a specimen carried by a slide comprises a specimen processing station and a controller. The specimen processing station includes an opposable actuator and a slide holder platen. The slide holder platen includes a slide support region and a liquid replenishment device. The slide holder platen is configured to heat a liquid on a slide at the slide support region while an opposable element held by the opposable actuator contacts and moves the liquid across the slide surface. The replenishment device is configured to deliver a supplemental liquid between the opposable element and the slide. The controller is programmed to control the specimen processing station such that the replenishment device delivers the supplemental liquid at a replenishing rate to compensate for evaporative losses of the liquid.

The controller may include one or more memories and a programmable processor. The memory stores a first sequence of program instructions and a second sequence of program instructions. The programmable processor is configured to execute the first sequence of program instructions in order to process a specimen on the slide with a first liquid and configured to execute the second sequence of program instructions to process the specimen with a second liquid that is different from the first liquid. Herein, the programmable processor may be configured to execute the first sequence of program instructions in order to heat the slide to a first temperature using the slide holder platen, and the controller is configured to execute the second sequence of program instructions in order to heat the slide to a second temperature using the slide platen, the second temperature is different from the first temperature.

The controller may be configured to execute a first sequence of program instructions to command the replenishment device to deliver a first liquid to the slide at a first rate. The controller is further configured to execute a second sequence of program instructions to command the replenishment device to deliver a second liquid to the slide at a second rate that is different from the first rate. Herein, the first rate may correspond to an evaporation rate of the first liquid, and the second rate corresponds to an evaporation rate of the second liquid. The controller can help moderate evaporative losses.

The controller may include a memory that stores a replenishment program executable by the controller in order to keep a volume of the liquid on the slide within an equilibrium volume range. Herein, the equilibrium volume range is about 70 μL to about 260 μL. Herein, the controller may be programmed to command the specimen processing station to keep a volume of the liquid between a maximum equilibrium volume corresponding to an over-wetting condition and a minimum equilibrium volume corresponding to an under-wetting condition. The controller may be programmed to command the specimen processing station to move a volume of the liquid across a specimen held on the slide by moving an opposable element held by the opposable actuator relative to the slide and can also be programmed to deliver the supplemental liquid from the replenishment device to generally compensate for a decrease in the volume of the liquid due to evaporation.

The controller may be configured to receive reference evaporation rate information (e.g., evaporation rate information for the liquid) from a memory and to control the specimen processing station based on the reference evaporation rate information. Additionally or alternatively, the controller can be programmed to command the specimen processing station such that the replenishment device provides the supplemental liquid at a rate selected based on an evaporation rate of the liquid.

The system for processing a specimen may further comprise an opposable element and a controller. The opposable element is held by the opposable actuator and can extend outwardly past edges of the slide. The controller is programmed to control the specimen processing station to move the opposable element while the opposable element manipulates the liquid across the slide while an evaporation rate of the liquid is kept equal to or less than about a predetermined rate (e.g., 7 μL per minute, 5 μL per minute, or the like at about 37°C).

A method of processing a specimen on a slide includes moving a liquid along a slide using an opposable element contacting the liquid. The temperature of the liquid on the slide is controlled while moving the liquid. At least one of a volume of the liquid and/or a total evaporation rate of the liquid is evaluated, and a supplemental liquid is delivered onto the slide based on the evaluation to keep the volume of the liquid on the slide within an equilibrium volume range. Herein, the volume of the liquid and the total evaporation rate of the liquid may be received from a memory to evaluate the volume of the liquid and the total evaporation rate of the liquid from a memory evaluating the at least one of the volume of the liquid and/or the total evaporation rate of the liquid includes receiving. The equilibrium volume range can be about 125 μL to about 175 μL.

**BRIEF DESCRIPTION OF THE DRAWINGS**

Embodiments according to the present invention are described with reference to the following drawings. The same reference numerals refer to like parts or acts throughout the various views, unless otherwise specified.

Figure 1 is an isometric view of a specimen processing system.

Figure 2 is an exploded isometric view of the specimen processing system of Figure 1. Portions of a protective housing are shown removed.

Figure 3 is a detailed view of a portion of the specimen processing system of Figure 2.

Figure 4 is an isometric view of a slide ejector assembly.

Figure 5 is an isometric view of the slide ejector assembly of Figure 4 with protective plates shown removed.

Figures 6 and 7 are side views of the slide ejector assembly of Figure 4 with a slide carrier shown in different positions.

Figure 8 is an isometric view of a slide staging device of a slide ejector assembly with a slide ready to be removed.

Figure 9 is an isometric view of an empty slide staging device.

Figures 10 and 11 are top plan views of a slide staging device with an alignment device.

Figures 12 and 13 are isometric views of a slide ejector assembly with a protective plate shown removed.

Figure 14 is a top plan view of the slide ejector assembly of Figures 12 and 13.

Figure 15 is an isometric view of an opposable dispenser.

Figure 16 is a side view of the opposable dispenser of Figure 15.

Figure 17 is an isometric view of a transport assembly and a specimen processing station.

Figure 18 is a side view of a transport assembly ready to deliver an opposable and a slide to a specimen processing station.

Figure 19 is a side view of an opposable actuator holding an opposable.

Figure 20 is an isometric view of a specimen processing station ready to process a specimen on a slide.

Figure 21A is a front, top, left side isometric view of a slide holder platen holding a slide.

Figure 21B is a front, top, left side isometric view of the slide holder platen of Figure 21A ready to hold a slide.

Figure 22 is a front, bottom, left side isometric view of the slide holder platen of Figure 21A.

Figure 23 is a bottom view of the slide holder platen of Figure 21A.

Figure 24A is a cross-sectional isometric view of the slide holder platen taken along a line 24A-24A of Figure 23.

Figure 24B is a cross-sectional view of the slide holder platen taken along a line 24B-24B of Figure 23.

Figure 25 is a top plan view of a specimen processing station holding a specimen-bearing slide.

Figure 26 is a cross-sectional view of a portion of the specimen processing station taken along a line 26-26 of Figure 25.

Figure 27 is a cross-sectional view of a portion of the specimen processing station taken along a line 27-27 of Figure 25.

Figure 28 is a cross-sectional view of a slide holder platen taken along a line 28-28 of Figure 25.

Figure 28A is a plot of location along a contact surface of a slide support versus thermal energy conducted to a slide.

Figure 28B is a plot of location along the contact surface of the slide support versus temperature of the contact surface .

Figure 28C is a plot of location along an upper surface of a slide versus temperature of the upper surface of the slide.

Figure 29 is a top plan view of heating zones produced on a slide support surface of the support element.

Figure 30 is a flow chart illustrating a method for heating a slide.

Figure 31 illustrates a slide holder platen and a dispenser assembly.

Figure 32 is a plot of equilibrium volume of a liquid on a slide versus total evaporation rate of the liquid.

Figure 33 is a plot of time versus liquid coverage.

Figures 34A and 34B are side and top views of a narrowed band of liquid at an end of a gap between an opposable and a slide.

Figures 35A and 35B are side and top views of the spread band of liquid.

Figures 36A and 36B are side and top views of the band of liquid contacting a biological specimen.

Figures 37A and 37B are side and top views of the band of liquid between the opposable and a region of the slide adjacent to a label.

Figures 38A and 38B are side and top views of the narrowed band of liquid at an end of a gap adjacent to a label of the slide.

Figure 39 is an isometric view of an opposable.

Figure 40 is a top plan view of the opposable of Figure 39.

Figure 41 is a side elevational view of the opposable of Figure 39.

Figure 42 is a detailed view of a portion of the opposable of Figure 41.

## DETAILED DESCRIPTION OF TECHNOLOGY

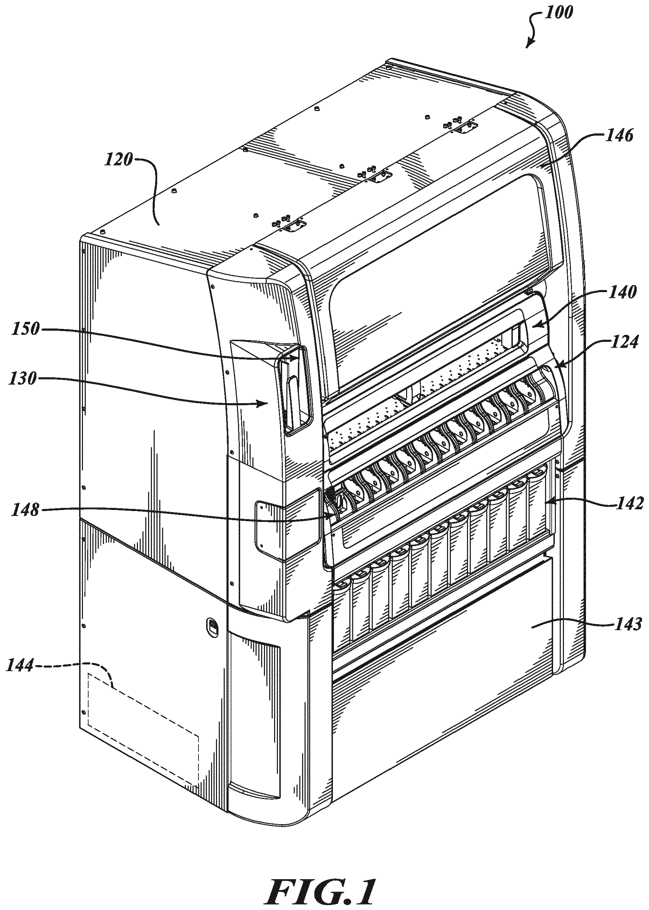

Figure 1 shows a specimen processing system 100 ("system 100") including a protective housing 120, a slide carrier parking station 124 ("parking station 124"), an opposable carrier loading station 130 ("loading station 130"), and reagent parking stations 140, 142. The system 100 can automatically process specimen-bearing slides using opposables loaded via the loading station 130 to perform, for example, specimen conditioning (e.g., cell conditioning, washing, deparaffinizing, etc.), antigen retrieval, staining (e.g., H&E staining), or other types of protocols (e.g., immunohistochemistry protocols, in situ hybridization protocols, etc.) for preparing specimens for visual inspection, fluorescent visualization, microscopy, microanalyses, mass spectrometric methods, imaging (e.g., digital imaging), or other analytical or imaging methods. The system 100 can simultaneously process 20 specimen-bearing slides using the same or different protocols to provide processing flexibility and a relatively high throughput. The specimens can remain on the slides throughout processing (e.g., baking through staining) for convenient handling and preventing cross-contamination.

The protective housing 120 inhibits, limits, or substantially prevents contaminants from entering an internal processing environment. The protective housing 120 can include a cover 146 that can be opened to access internal components, including, without limitation, robotic components (e.g., robotic arms), transport devices (e.g., conveyors, actuators, etc.), fluidic components, specimen processing stations, slide platens, mixing components (e.g., mixing wells, reagent trays, etc.), slide carrier handling components, opposable carrier handling components, dryers, pressurization devices (e.g., pumps, vacuum devices, etc.), or the like.

The parking station 124 includes a row of bays. A slide carrier in the form of a basket is positioned in a left bay 148. Each bay can be configured to receive other types of slide carriers, such as racks, baskets, trays, or other types of carriers suitable for carrying slides before, during, or after specimen processing. The illustrated parking station 124 includes 12 bays separated by dividers. The number of bays, positions of bays, bay orientations, and bay configurations can be selected based on the types of slide carriers to be used.

The loading station 130 includes a receiving opening 150 through which a user can load an opposable carrier. The opposable carrier can be a magazine that holds a stack of opposable elements. Herein, the opposable carriers can be cartridges, or other portable structures for carrying opposables.

The parking stations 140, 142 each includes a row of bays. Each bay can hold one or more containers, including bulk reagent containers, bottles, bag-in-box reagent containers, or the like. The parking station 142 can hold bulk liquid containers that provide liquids used in larger volumes, such as wash solutions. Empty containers in the parking stations 140, 142 can be conveniently replaced with full containers.

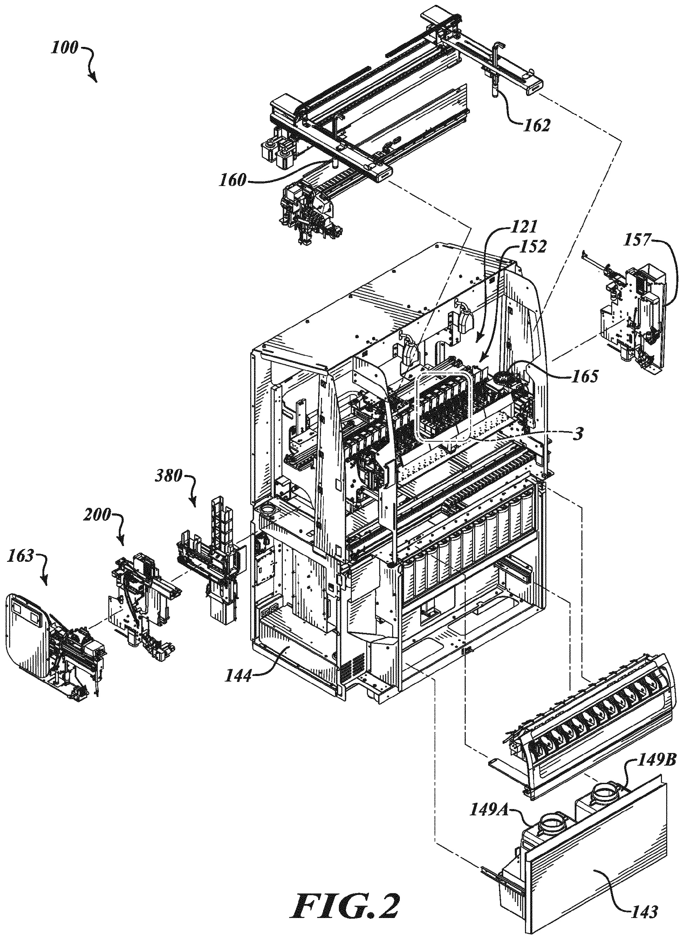

Fluid movement into, out of, and within specimen processing stations can be controlled by a fluidics module that includes, for example, pumps, valves, and filters. A pneumatics module can supply pressurized air and generate vacuums to perform various slide processing operations and to move fluids throughout the system 100. Waste can be delivered to a waste drawer 143. Figure 2 shows the waste drawer 143 holding waste containers 149A, 149B. The pneumatics module can deliver waste from the specimen processing stations to the containers 149A, 149B, which can be emptied periodically.

A controller 144 can command system components and can generally include, without limitation, one or more computers, central processing units, processing devices, microprocessors, digital signal processors (DSPs), application-specific integrated circuits (ASICs), readers, and the like. To store information, the controller 144 can include, without limitation, one or more storage elements, such as volatile memory, non-volatile memory, read-only memory (ROM), random access memory (RAM), or the like. The stored information can include heating programs, optimization programs, tissue preparation programs, calibration programs, indexing programs, or other executable programs. Optimization programs can be executed to optimize performance (e.g., enhance heating, reduce excess reagent consumption, increase productivity, enhance processing consistency, or the like). The processing may be optimized by determining, for example, an optimum schedule to (1) increase processing speeds, (2) reduce the time of heating or cooling cycles, (3) increase throughput (e.g., increase the number of slides processed in a certain length of time), and/or (4) reduce reagent waste. Herein, the controller 144 may determine loading sequences for loading the specimen processing stations to reduce processing times and to determine loading sequences of the dispensers. This saves time because fluids can be dispensed onto the next specimen-bearing slide as soon as a specimen-bearing slide is removed from the specimen processing station.

Figure 2 is an isometric exploded view of the specimen processing system 100 including a processing station 163, a slide ejector assembly 200, an opposable dispenser 380, and a specimen return mechanism 157. The processing station 163, the slide ejector assembly 200, and the opposable dispenser 380 are positioned at the left side of an internal environment 121. The specimen return mechanism 157 is positioned at the right side of the internal environment 121. A mixing station 165 is positioned generally below the specimen return mechanism 157 and can hold containers (e.g., vials, beakers, etc.) in which substances are stored and/or mixed. A row 152 of 20 specimen processing stations can independently process biological specimens.

In operation, a user can load slide carriers carrying specimen-bearing slides into the empty bays of the parking station 124 of Figure 1 and can load opposable carriers carrying opposables into the loading station 130. The slide carriers can be transferred to a reader (e.g., a label reader, a barcode reader, etc.), not shown that reads labels, if any, on the slides. The slide carriers can be delivered to the processing station 163 which can include, without limitation, a dryer (e.g., a dehydration unit), a heating unit (e.g., a baking module), or other component capable of removing water from the slides, heating specimens (e.g., heating specimens to adhere the specimens to the slides), or the like. Herein, the processing station 163 may blow hot air over slides to dry the slides, and if the specimens contain paraffin, the hot air can soften the paraffin to promote adhesion of the specimens to the slides. An air system can partially recirculate air to control the humidity in the processing station 163. Slide carriers can be picked up and transported from the processing station 163 to another module (e.g., a specimen processing station, a label reader, etc.) or returned to one of the bays of the parking station 124.

The specimen return mechanism 157 can load specimen-bearing slides into a slide carrier. The loaded slide carriers can be transported to the parking station 124. If the slide carriers are compatible with an automated coverslipper, a user can transport the slide carriers from the parking station 124 to an automated coverslipper for coverslipping. Alternatively, the slides can be manually coverslipped. The coverslipped slides can be analyzed using optical equipment, e.g., a microscope or other optical devices.

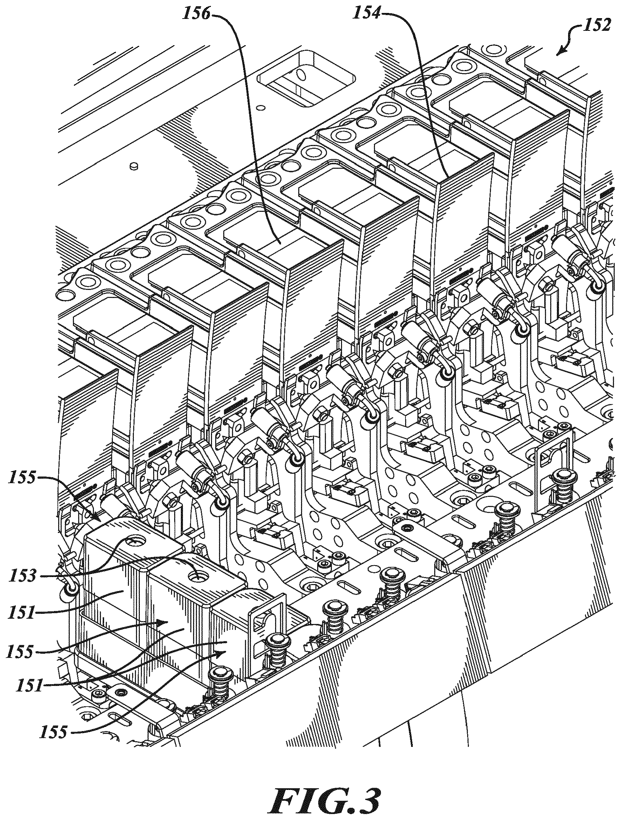

Figure 3 is a detailed view of a section of the row 152. An opposable element 154 ("opposable 154") can move substance along a slide 156 to contact a specimen on the slide 156. As illustrated, 20 slides can be processed independently using a series of substances.

If a specimen is a biological sample embedded in paraffin, the sample can be deparaffinized using appropriate deparaffinizing fluid(s). After removing the deparaffinizing fluid(s), any number of substances can be successively applied to the specimen using the opposable 154. Fluids can also be applied for pretreatment (e.g., protein-crosslinking, exposing nucleic acids, etc.), denaturation, hybridization, washing (e.g., stringency washing), detection (e.g., linking a visual or marker molecule to a probe), amplifying (e.g., amplifying proteins, genes, etc.), counterstaining, or the like. Herein, the substances can include, without limitation, stains (e.g., hematoxylin solutions, eosin solutions, or the like), wetting agents, probes, antibodies (e.g., monoclonal antibodies, polyclonal antibodies, etc.), antigen recovering fluids (e.g., aqueous- or non-aqueous-based antigen retrieval solutions, antigen recovering buffers, etc.), solvents (e.g., alcohol, limonene, or the like), or the like. Stains include, without limitation, dyes, hematoxylin stains, eosin stains, conjugates of antibodies or nucleic acids with detectable labels such as haptens, enzymes or fluorescent moieties, or other types of substances for imparting color and/or for enhancing contrast. Herein, the applied substance can be a liquid reagent applied via dispensers, such as pipette dispensers 160, 162 depicted in Figure 2.

A biological specimen can include one or more biological samples. Biological samples can be a tissue sample or samples (e.g., any collection of cells) removed from a subject. The tissue sample can be a collection of interconnected cells that perform a similar function within an organism. A biological sample can also be any solid or fluid sample obtained from, excreted by, or secreted by any living organism, including, without limitation, single-celled organisms, such as bacteria, yeast, protozoans, and amebas, multicellular organisms (such as plants or animals, including samples from a healthy or apparently healthy human subject or a human patient affected by a condition or disease to be diagnosed or investigated, such as cancer). Herein, a biological sample may be mountable on a microscope slide and includes, without limitation, a section of tissue, an organ, a tumor section, a smear, a frozen section, a cytology prep, or cell lines. An incisional biopsy, a core biopsy, an excisional biopsy, a needle aspiration biopsy, a core needle biopsy, a stereotactic biopsy, an open biopsy, or a surgical biopsy can be used to obtain the sample.

Figure 3 shows a rack carrying a set of sealed containers 155 each holding about 10mL to about 30mL of reagent. The sealed containers 155 have caps 151 with seal elements in the form of septums 153 that can minimize, limit, or substantially prevent evaporation losses. The septums 153 can be broken (e.g., pierced, torn, etc.) to access the contents of the containers 155. When the user installs the containers 155, septums 153 can be broken to establish fluid communication with a pump, which in turn delivers the fluid to an appropriate specimen processing station. The containers 155 can include, without limitation, one or more human readable labels, machine readable labels (e.g., a barcode to be read by the system 100), or other types of labels. The parking station 140 can provide fluids and solutions that are used in smaller volumes (e.g., dye solutions, such as hematoxylin and eosin solutions).

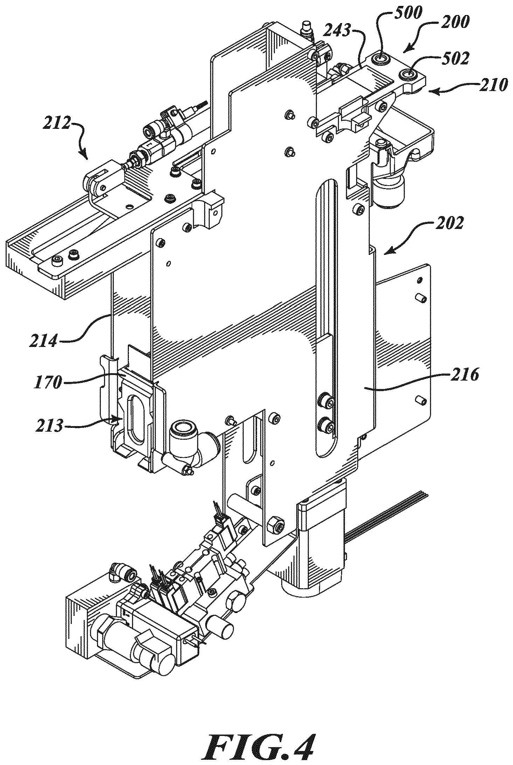

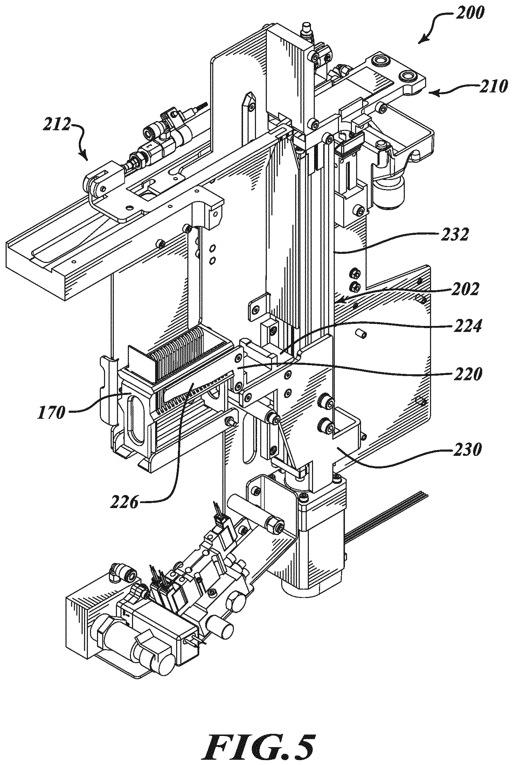

Figures 4 and 5 show a slide carrier 170 loaded into a slide ejector assembly 200 ("ejector assembly 200"). A plate 216 of Figure 4 is shown removed in Figure 5. The ejector assembly 200 includes a slide carrier handler 202 ("carrier handler 202"), a slide staging device 210 ("staging device 210"), and an ejector 212. The carrier handler 202 can include a carrier receiver 220 (Figure 5) and a receiver rotator device 224 (Figure 5). The carrier receiver 220 includes a pair of spaced apart arms 226 (e.g., elongate members, cantilevered members, etc.) upon which the slide carrier 170 can rest. The illustrated slide carrier 170 is a slide rack capable of holding microscope slides in a spaced-apart arrangement. One slide is shown in the carrier 170 of Figures 4 and 5. Herein, the slide carrier 170 can be a basket, such as a SAKURA® basket or similar basket with shelves or dividers.

The carrier receiver 220 of Figure 5 can include one or more grippers, clamps, retainers, or other components that releasably hold slide carriers. The receiver rotator device 224 can include, without limitation, one or more motors, actuation devices, or other components capable of rotating the arms 226. The arms 226 can move along an arcuate track, a pivoting mechanism, or the like to rotate the slide carrier 170. The carrier handler 202 can further include a carriage 230 and a rail 232. The carriage 230 can travel along the rail 232 to move the slide carrier 170 vertically.

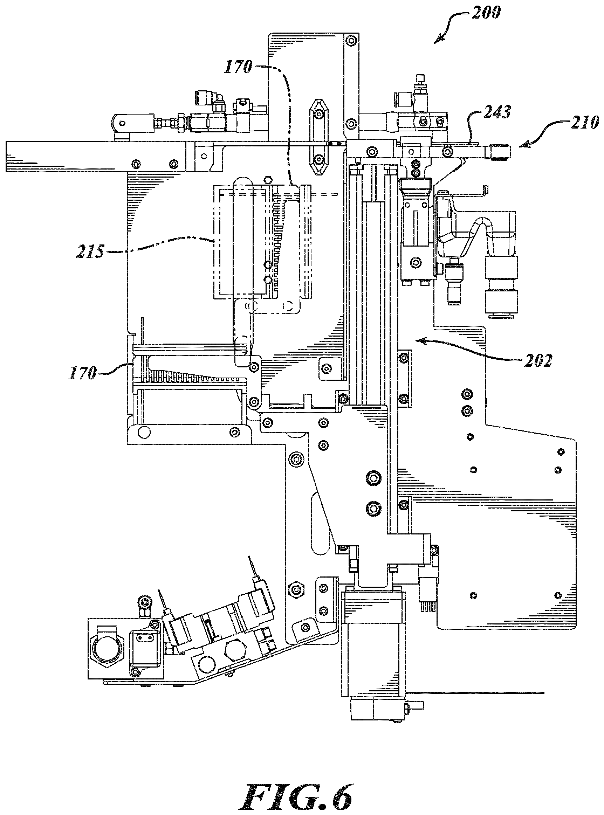

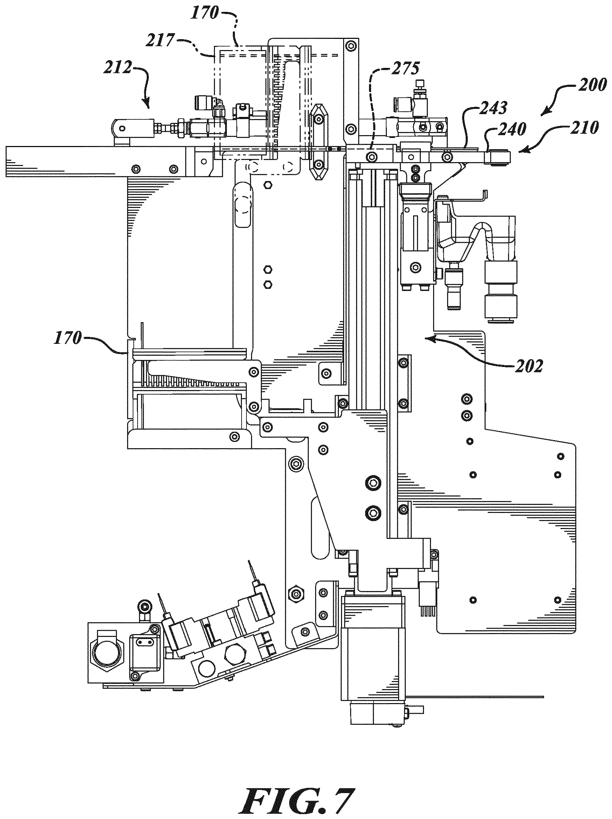

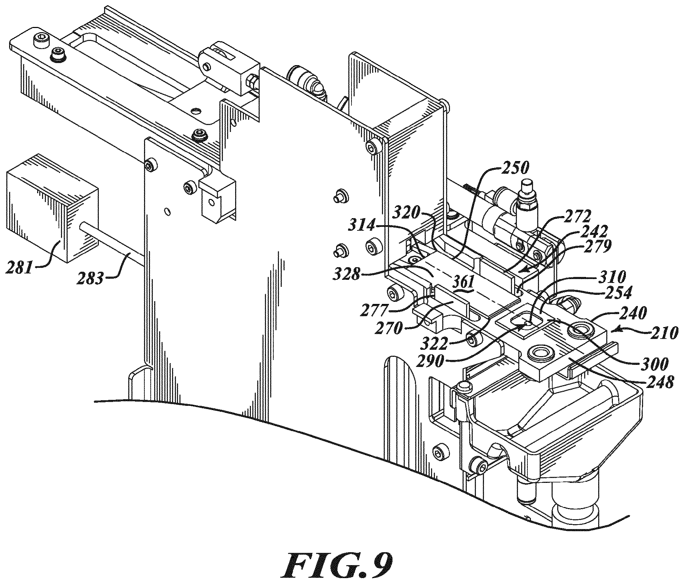

Referring again to Figure 4, a fully or partially loaded slide carrier can be inserted between the plates 214, 216. The receiver rotator device 224 (Figure 5) can rotate the carrier receiver 220 from a loading position 213 (Figure 4) in which slides are held in a substantially vertical orientation to an intermediate position 215 (Figure 6) in which slides are held in a substantially horizontal orientation. The slide carrier 170 can be moved vertically to an unloading position 217 (Figure 7). The ejector 212 can sequentially move the specimen-bearing slides to the staging device 210. The staging device 210 can position the specimen-bearing slide for subsequent transport, as discussed in connection with Figures 9-11.

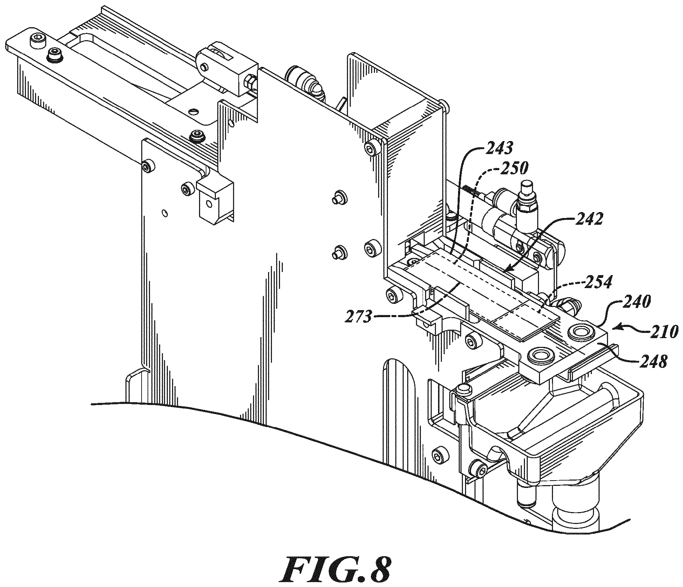

Figures 8 and 9 are isometric views of the staging device 210 including a standby platform 240 and an alignment device 242. The standby platform 240 can include a cantilevered plate 248, a slide holding region 250 ("holding region 250"), and an over-travel inhibitor 254. In Figure 8, a slide 243 is resting on the holding region 250, which can be a raised region that is smaller than the slide 243. The slide 243 can protrude outwardly from the holding region 250 such that excess fluid, if any, can drain from the slide 243 onto the plate 248 without wicking underneath the slide 243 (e.g., between the slide 243 and a surface 361 of Figure 9). Herein, the standby platform 240 can include, without limitation, one or more sensors, readers, heaters, dryers, or other components that facilitate processing of the slides.

Referring to Figure 9, the over-travel inhibitor 254 that can accurately position a slide without physically contacting specimens on the slide, label edges, and/or other areas of the slide that may affect positioning accuracy. Herein, the over-travel inhibitor 254 can position a slide without contacting the top of the slide at locations, for example, near overhanging labels, which can effect positioning accuracy. The over-travel inhibitor 254 includes a vacuum port 290 and a vacuum source 281 fluidically coupled to the vacuum port 290 via one or more fluid lines 283 (e.g., internal fluid lines, external fluid lines, etc.). The vacuum source 281 can include, without limitation, one or more pressurization devices, pumps, or other types of devices capable of drawing a vacuum via an opening 310. A bottom surface of the slide 243 (Figure 8) and a contact surface 300 of the vacuum port 290 can form a seal to maintain the vacuum. Herein, the contact surface 300 can comprise one or more compressible materials (e.g., rubber, silicon, or the like) capable of maintaining an airtight seal. Otherwise, the contact surface 300 can comprise one or more non-compressible materials (e.g., aluminum, stainless steel, etc.) and, further, may include one or more sealing members (e.g., O-rings, gaskets, sealing cups, etc.) used to form a seal with the slide 243.

The holding region 250 includes ends 320, 322 and a main body 328 extending between the ends 320, 322. An ejector stop 314 is defined by the end 320 and can be used to reference the position of an end of the slide 243. The ejector stop 314 can be a sidewall or edge of the end 320. Herein, the ejector stop can be one or more protrusions.

Figures 9-11 show the alignment device 242. The alignment device 242 includes a pair of generally parallel jaws 270, 272 that protrude upwardly through openings 277, 279, respectively, and vertically past the holding region 250. The alignment device 242 can include, without limitation, one or more actuators (e.g., pneumatic actuators, electromechanical actuators, etc.) capable of moving the jaws 270, 272. The alignment device 242 can align the slide to facilitate slide pickup and handling because a transfer head may be unable to properly pick up and handle a misaligned slide. Herein, a label of the slide can be spaced apart from the jaws 270, 272 to prevent unwanted adherence of the slide to the jaws 270, 272.

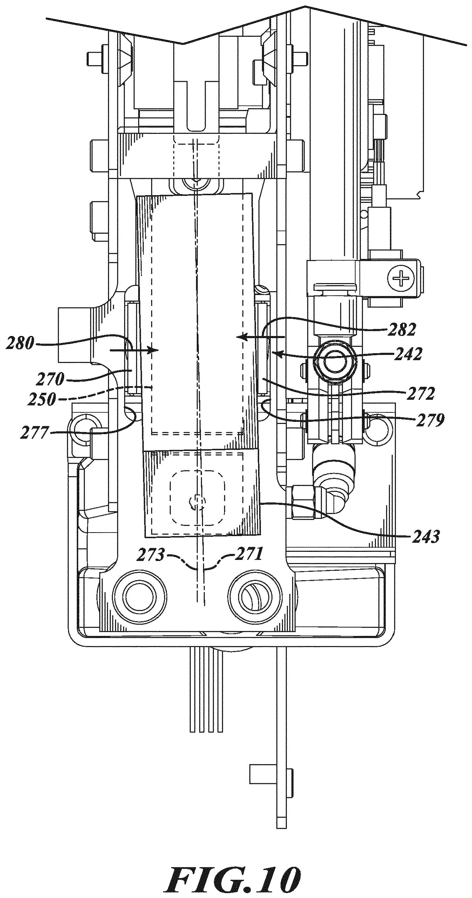

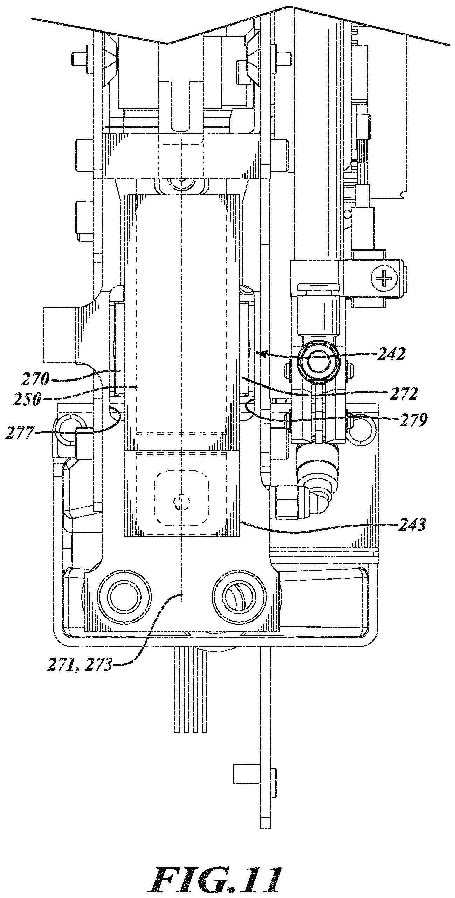

Figure 10 shows a longitudinal axis 271 of the slide 243 in a misaligned position. The longitudinal axis 271 is not parallel to a longitudinal axis 273 of the holding region 250. The jaws 270, 272 can move from an open position (Figure 10) towards one another (indicated by arrows 280, 282) to a closed position (Figure 11) so as to reposition the slide 243. Herein, the longitudinal axis 271 of the slide 243 in an aligned position can be substantially aligned (e.g., parallel) with the longitudinal axis 273 of the holding region 250. After aligning the slide 243, the jaws 270, 272 can be returned to the open position and the slide 243, now aligned, can be picked up. The configuration and operation of the alignment device 242 can be selected based on the desired position of the aligned slide. Additionally, the alignment device 242 can be used to align slides having different dimensions because the jaws 270, 272 apply the same force to the side of the slide.

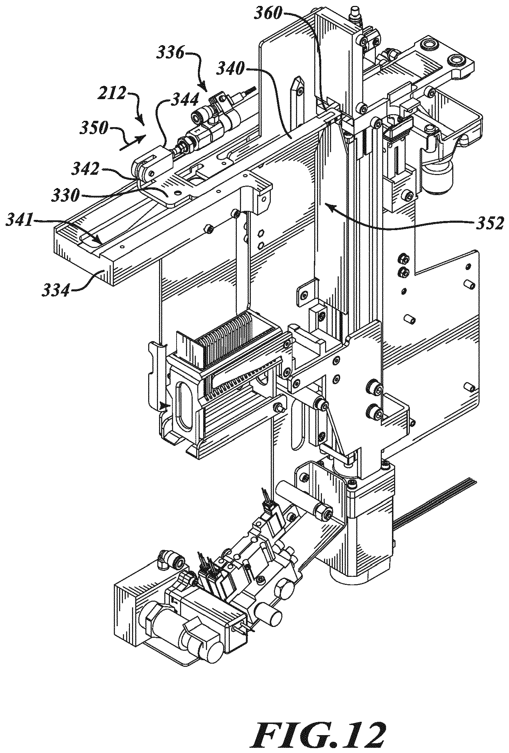

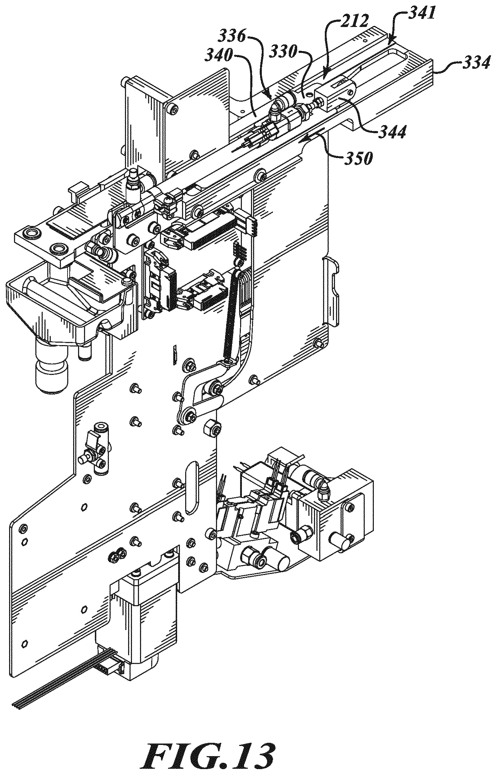

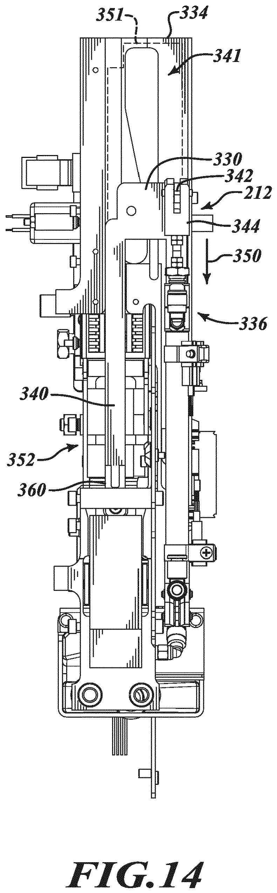

Figures 12-14 show the ejector 212, which includes an ejector element 330, a base 334, and a drive mechanism 336. The ejector element 330 includes an elongate portion 340 positioned in a recess 341 in the base 334 and a mounting portion 342 coupled to a rod 344 of the drive mechanism 336. The drive mechanism 336 can provide reciprocating linear motion and can comprise, without limitation, one or more stopper motors, pistons (e.g., pneumatic pistons, hydraulic pistons, etc.), pressurization devices (e.g., pumps, air compressors, etc.), sensors, or the like. The illustrated rod 344 has been moved in the direction indicated by arrow 350 to move the ejector element 330 from a first or initial position 351 (illustrated in phantom line in Figure 14) across a slide carrier receiving gap 352 ("gap 352") such that a head 360 of the elongate portion 340 pushes a slide onto the standby platform 240. The head 360 can comprise a compliant material (e.g., rubber, plastic, etc.) to avoid damaging the slides. Herein, the head 360 can push the slide along the surface 361 (Figure 9) of the holding region 250 until the slide is at the desired location. Slides can be removed from the slide carrier 170 one at a time until the slide carrier 170 is empty.

Referring again to Figures 1 and 2, a user can load a slide carrier holding specimen-bearing slides into the parking station 124. A transfer mechanism can transport the slide carrier to the ejector assembly 200. The transfer mechanism can include, without limitation, one or more robotic handlers or arms, X-Y-Z transport systems, conveyors, or other automated mechanisms capable of carrying items between locations. Herein, the transfer mechanism may include one or more end effectors, grippers, suction devices, holders, clamps, or other components suitable for gripping the slide carrier.

The ejector assembly 200 moves the slide carrier 170 to the unloading position 217 (Figure 7). The slide carrier 170 is moved vertically to index slides relative to a reference position. The reference position can be a plane (e.g., a fixed slide removal plane 275 shown in Figure 7) defining a slide removal position. A bottom of the slide to be removed can be generally coplanar or slightly above the surface 361 (Figure 9). The drive mechanism 336 can move the ejector element 330 horizontally to move the elongate portion 340 (Figure 12) through the carrier 170 to push the slide onto the surface 361 (Figure 8). A vacuum can be drawn by the slide over-travel inhibitor 254 to inhibit movement of the slide 243 as the head 360 contacts the ejector stop 314 (Figure 9). The head 360 can then be moved away from the slide 243. The jaws 270, 272 can be moved from the open position to the closed position to align the slide 243. The aligned slide 243 can be retrieved and transported to a specimen processing station. The drive mechanism 336 can move the ejector element 330 back and forth and the slides can be indexed to sequentially deliver all of the slides to the staging device 210.

To protect the specimens, the lowermost slide in the slide carrier 170 can be ejected first. By starting with the lowermost slide, the specimen(s) on the vertically adjacent slide can be facing away from the head 360 and therefore protected. If the head 360 is vertically misaligned with the slide to be removed, the head 360 may strike the bottom of the vertically adjacent slide without dislodging the specimen(s) on the upper surface of the vertically adjacent slide. After removing the lowermost slide, the lowermost slide left in the slide carrier 170 can be removed. This process can be repeated until the slide carrier 170 is empty. Other indexing sequences can be used to remove the slides.

The empty slide carrier 170 can be returned to the loading position (Figure 4) and then transported to one of the bays of the parking station 124. The empty slide carrier 170 can be removed from the parking station 124 and filled with specimen-bearing slides and returned to the parking station 124. Alternatively, the empty slide carrier 170 can be filled with processed specimen-bearing slides using the ejector assembly 200. A pusher assembly can be used to push processed specimen-bearing slides on the staging device 210 into a slide carrier. Thus, the ejector assembly 200 can be used to both unload and load slide carriers.

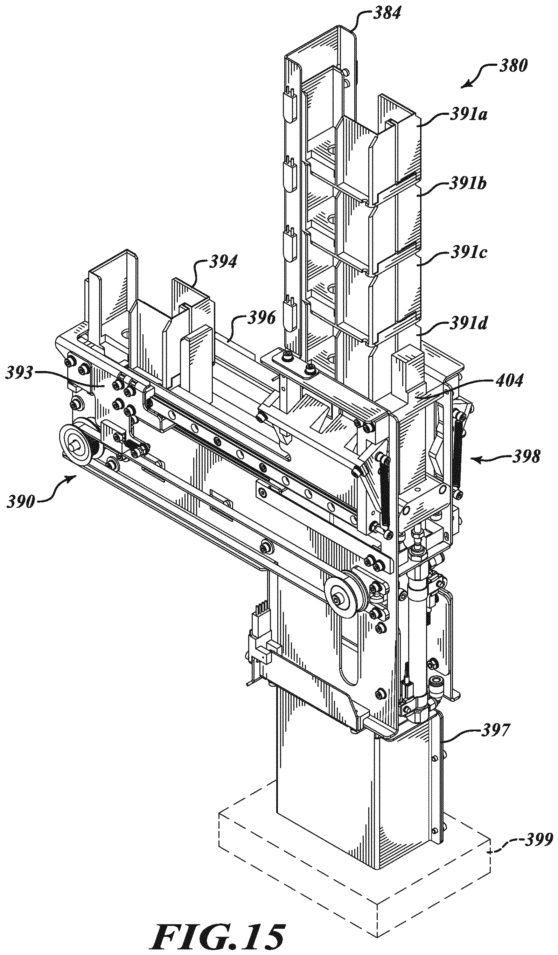

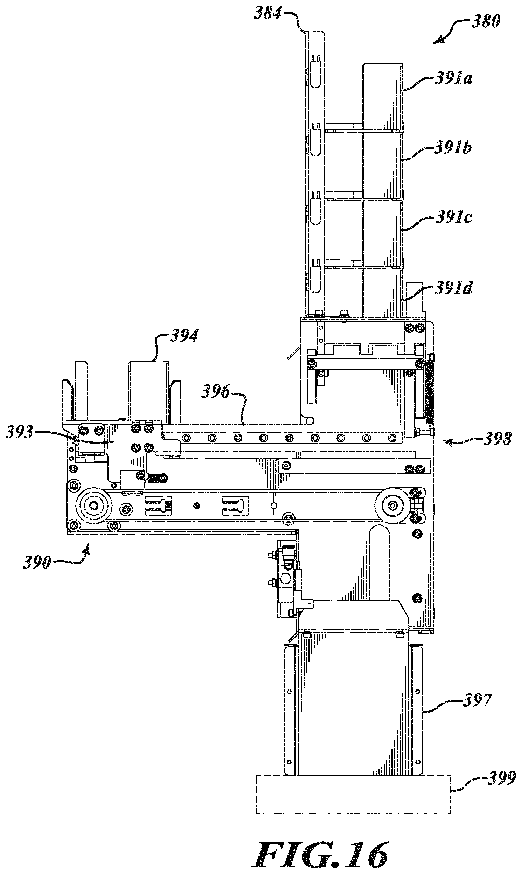

Figures 15 and 16 show an opposable dispenser 380 that includes an opposable carrier holder 384 ("holder 384") and a conveyor system 390. A transfer mechanism can transport opposable carriers from the loading station 130 (Figure 1) to the holder 384. As illustrated, the holder 384 is configured to hold four magazines 391a, 391b, 391c, 391d (collectively "391"), each holding 30 opposables, to provide an on-board capacity of 120 opposables. Otherwise, the dispenser 380 can hold a higher or lower number of magazines or other type of opposable carriers.

The conveyor system 390 includes a carriage 393, a rail 396, and an actuation mechanism 398. The actuation mechanism 398 can include an actuator (e.g., a piston assembly, a pneumatic cylinder, etc.) that moves a vertical lift 404 to raise and/or lower the magazines 391. The carriage 393 can carry a lowered opposable magazine to an unload position at the end of the rail 396. Figures 15 and 16 show an empty magazine 394 at the unload position. The vertical lift 404 moves up to retrieve the next magazine 391 and the carriage 393 moves the empty magazine 394 underneath the stack of magazines 391. The carriage 393 can release the empty magazine 394 such that the magazine 394 falls down a chute 397 to a storage bin 399 (illustrated in phantom line).

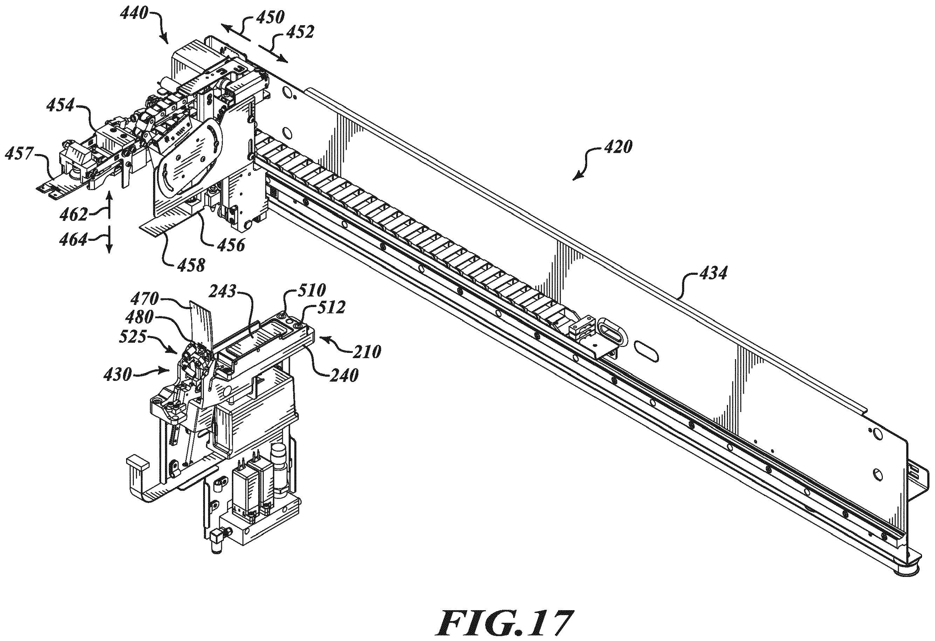

Figure 17 shows a transport assembly 420 and a specimen processing station in the form of a wetting module 430. Slides can be individually processed at the wetting module 430 to avoid carryover of liquids, excessive waste (e.g., reagent waste), and/or reagent degradation to provide consistent processing. The wetting module 430 can use an opposable element 470 to motivate liquids to enhance processing consistency, reduce processing times, and allow processing with low concentration reagents. Relatively low volumes of reagents can be used to uniformly stain specimens. Relatively low volumes of washing solutions can be used to thoroughly wash specimens in a relatively short period of time. Washing cycles can be performed before, between, and after staining cycles. After processing of the specimen, the transport assembly 420 can replace the used opposable 470 with a new opposable 457 and replace the used slide 243 with a new slide 458.

The transport assembly 420 can include, without limitation, a drive mechanism 434 (e.g., a rack drive mechanism, a belt drive mechanism, etc.) and a lift mechanism 440. The drive mechanism 434 can move the lift mechanism 440 horizontally, as indicated by arrows 450, 452. The lift mechanism 440 can move end effectors in the form of transfer heads 454, 456 vertically, as indicated by arrows 462, 464. The transfer heads can include, without limitation, one or more suction devices (e.g., suction cups, pumps, vacuum pumps, etc.), mechanical grippers (e.g., jaws, clamps, etc.), retention features (e.g., features that prevent dropping of slides/opposables), or the like. For example, the transfer head 454 can be a pickup head (e.g., a rotatable or floating pickup head) capable of picking up and holding an opposable 457 via a vacuum. The vacuum can be reduced (e.g., eliminated) to release the opposable 457. Additionally or alternatively, a mechanical gripper can hold the opposable 457.

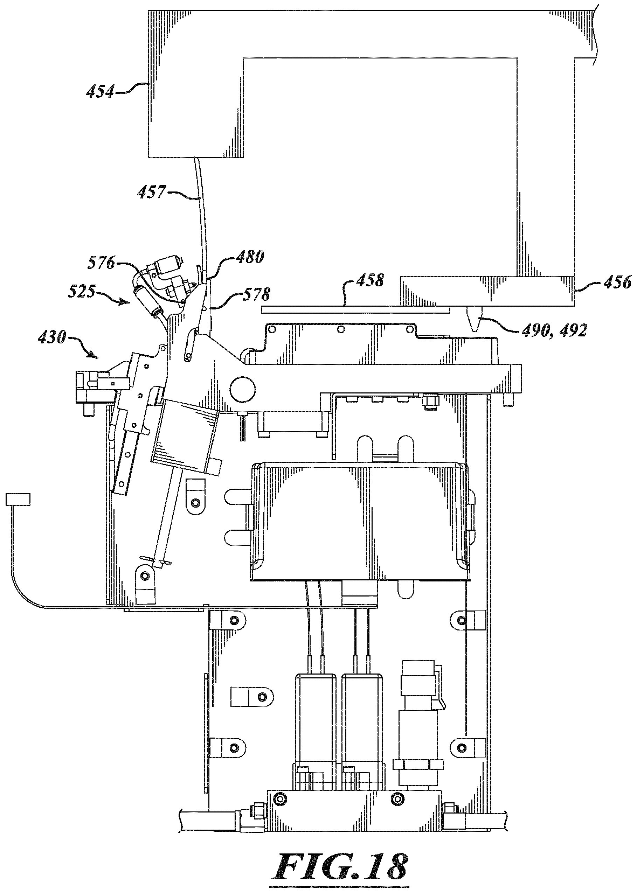

Figure 18 shows the transfer heads 454, 456 delivering the opposable 457 and slide 458, respectively, to the wetting module 430. The transfer head 456 includes head alignment features 490, 492 receivable by complementary alignment features 500, 502 (Figure 17) of the standby platform 240 and/or alignment features 510, 512 (Figure 17) of the wetting module 430. Alignment features can include, without limitation, pins (e.g., elongate rods), protrusions, openings (e.g., openings defined by bushings, openings in plates, etc.), or the like. Herein, the alignment features 490, 492 can be in the form of pins that can be inserted into corresponding alignment features 510, 512 in the form of openings to align the slide 243 with the wetting module 430. The transfer head 456 can be a floating head to limit or prevent binding between the alignment features 490, 492 and the alignment features 510, 512, respectively. Otherwise, the alignment features 490, 492 are openings and the alignment features 510, 512 are upwardly protruding pins.

After removing the processed slide 243, the transfer head 456 can transport an unprocessed slide 458 from a staging device to the wetting module 430. The alignment features 490, 492 can be positioned above the alignment features 510, 512, and the transfer head 456 can be lowered to insert the alignment features 490, 492 into the alignment features 510, 512, respectively, until the slide 458 rests on the wetting module 430. The transfer head 456 can release the slide 458. After processing the specimen, the transfer head 456 can retrieve and load another slide into the wetting module 430. The slides can be retained at the wetting module 430 to prevent damage to the slide in the event of a power outage or other event that may effect system performance.

After removing the used opposable 470, the transfer head 454 can deliver the opposable 457 to an opposable receiver 480. Once the opposable 457 is positioned above the wetting module 430, the transfer head 454 can rotate the opposable 457 from a substantially horizontal orientation (Figure 17) to a substantially vertical orientation (Figure 18). Herein, the opposable 457 in the substantially horizontal orientation may define an angle less than 5 degrees with an imaginary horizontal plane, and an opposable in the substantially vertical orientation defines an angle less than 5 degrees with an imaginary vertical plane. The vertically oriented opposable 457 can be loaded into the opposable receiver 480. The transfer head 454 can remove used opposables and retrieve unused opposables from an opposable carrier (e.g., the opposable carrier holder 384 of Figures 15 and 16) and can load the unused opposables into the opposable receiver 480.

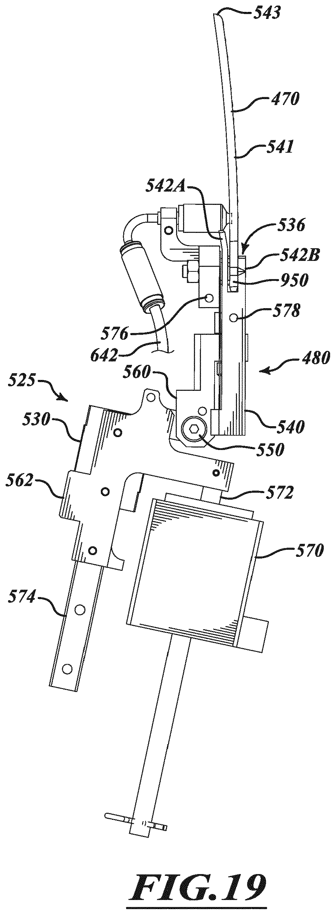

Figure 19 shows an opposable actuator 525 that includes the opposable receiver 480 and a drive mechanism 530. The opposable receiver 480 can include a clamp 536 and a main body 540. The clamp 536 includes a pair of jaws 542A, 542B that cooperate to hold a mounting end 950 of the opposable 470. The opposable 470 includes a main body 541 extending to a captivating end 543. The main body 541 is pivotally coupled to the drive mechanism 530 by a pivot 550. The drive mechanism 530 can include a linkage assembly 560 and a linear actuator assembly 562. The linkage assembly 560 includes the pivot 550, which allows rotation about one or more axes of rotation (e.g., two axes of rotation) and can include one or more roller ball bearings, pivots, hinges, or other features that provide desired motion. The linear actuator assembly 562 can include an energizable drive device 570 (e.g., a stepper motor, a drive motor, a solenoid, etc.), a moveable element 572 (e.g., a lead screw, a drive rod, etc.), and a rail assembly 574 (e.g., a carriage/rail assembly, a caged ball bearing linear rail assembly, etc.).

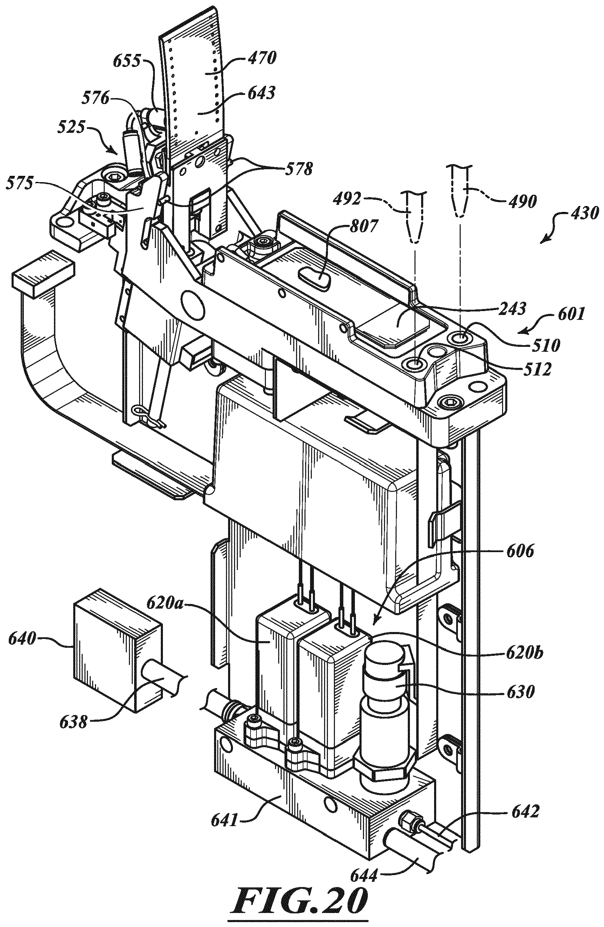

The opposable receiver 480 can be actuated by the linear actuator assembly 562 via the linkage assembly 560. The linear actuator assembly 562 can retract, and stationary cam(s) (e.g., cam 575 of Figure 20) can engage, pins 576, 578 and drive the opposable receiver 480 to an open configuration. As illustrated in Figure 19, the opposable receiver 480 in the open configuration can loosely hold the opposable 470. The opposable receiver 480 can be moved to a closed configuration by one or more biasing members (e.g., springs, pneumatic actuators, etc.). As the linear actuator assembly 562 extends, the pins 576, 578 can move upwardly and towards one another such that the biasing members close the opposable receiver 480.

The opposable actuator 525 can also include, without limitation, one or more sensors to detect the presence of the opposable 470, the position of the opposable 470, one or more characteristics of a processing liquid engaged by the opposable 470, or the like. The sensors can include, without limitation, contact sensors, electromechanical sensors, optical sensors, or chemical sensors that can be coupled to or incorporated into the opposable receiver 480 or other suitable component. The number, positions, and configurations of the sensors can be selected to achieve the desired monitoring functionality.

Figure 20 is an isometric view of the wetting module 430 holding the slide 243. The wetting module 430 includes the opposable actuator 525, a slide holder platen 601, and a manifold assembly 606. The opposable actuator 525 in a rolling state of operation can be extended or retracted to roll the opposable 470 back and forth along the slide 243. The motion of the rotary joints of the linkage assembly 560 (Figure 19), gravity, and/or liquid capillary forces can help maintain the desired motion of the opposable 470. Herein, the opposable actuator 525 can continuously or periodically roll (e.g., longitudinally roll, laterally roll, or both) the opposable 470 to agitate the volume of liquid, move (e.g., translate, spread, narrow, etc.) a band of liquid (e.g., a meniscus layer of liquid), control evaporation (e.g., to moderate evaporation), and/or otherwise manage the processing liquid.

The manifold assembly 606 includes a pair of sensors 620a, 620b (collectively "620") and a one or more valves 630. The sensors 620 can detect the pressures of working fluids and can send one or more signals indicative of detected pressures. A fluid line 638 can fluidically couple a pressurization source 640 to a manifold 641. Fluid lines 642, 644 fluidically couple the manifold 641 to a liquid removal device 655 and the slide holder platen 601. The liquid removal device 655 can remove liquid between the opposable 470 and the slide 243 via a waste port 643. The line 644 can be used to draw a vacuum to hold the slide 243 on the slide holder platen 601.

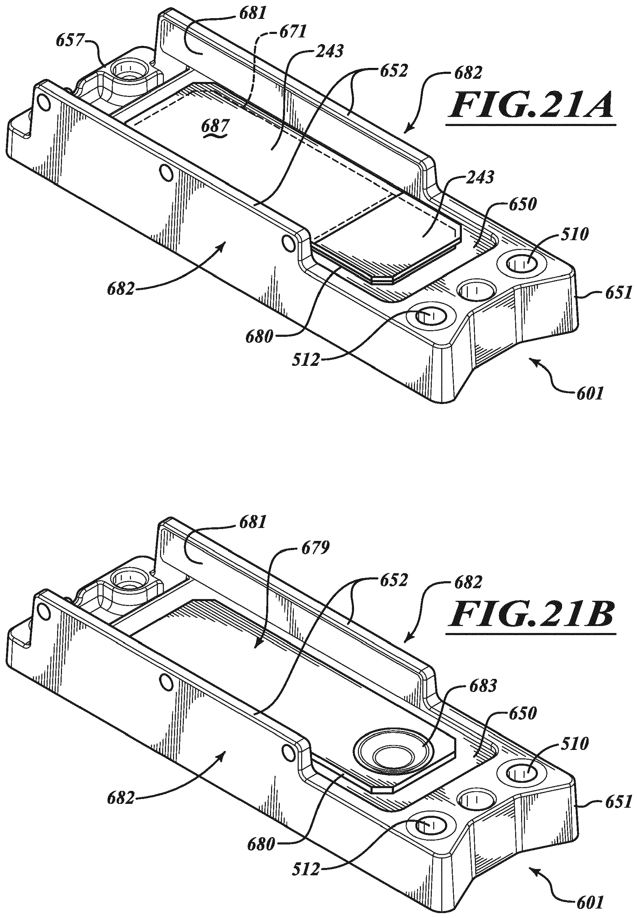

Figures 21A and 21B are isometric views of the slide holder platen 601. The slide holder platen 601 of Figure 21A supports the slide 243. The slide holder platen 601 of Figure 21B is empty. The slide holder platen 601 can include a support element 650 and a mounting base 651. The support element 650 includes a raised slide receiving region 680 having a contact or contact surface 679 (Figure 21B). A port 683 (Figure 21B) is positioned to draw a vacuum to hold the slide 243 against the contact surface 679. The port 683 can be a suction cup or other feature configured to facilitate drawing a strong vacuum between the slide 243 against the contact surface 679.

The support element 650 includes inner walls 681 positioned in outer walls 652 of the mounting base 651. The inner and outer walls 681, 652 form heatable sidewalls 682. Herein, the sidewalls 682 can be positioned on both sides of the contact surface 679 and can output heat energy to the surrounding air to control the temperature of the slide 243, processing fluid, and/or specimen(s). Herein, the sidewalls 682 can also be positioned to laterally surround the entire slide 243. The mounting base 651 can be made of an insulating material (e.g., plastic, rubber, polymers, or the like) that can insulate the support element 650 from other components. Herein, the mounting base 651 can be made of a material with a thermal conductivity that is substantially less than the thermal conductivity of the material of the support element 650. The mounting base 651 can surround and protect the support element 650 and includes a coupling region 657 to which the opposable actuator 525 can be coupled.

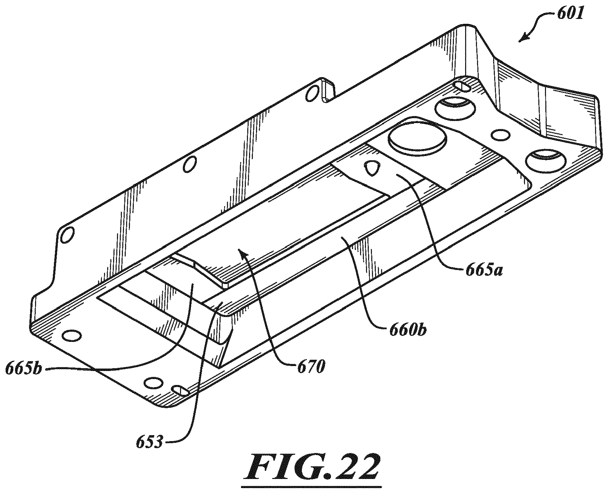

The support element 650 can be an uncoated element comprising one or more low heat transfer material(s) with a low thermal conductivity. Low heat transfer materials can include, without limitation, steel, stainless steel, or other materials with a thermal conductivity in a range of about 10 W/(m*K) at 25°C to about 25 W/(m*K) at 25°C. Herein, the low heat transfer material can comprise stainless steel with a thermal conductivity of 16 W/(m*K) at 25°C. Herein, the support element 650 may comprise mostly stainless steel by weight. Herein, at least most of the material of the support element 650 directly between a heating element 653 (Figure 22) and the slide 243 may comprise stainless steel by weight. The stainless steel support element 650 can be corrosion-resistant to the liquids used to process the specimens to provide a relatively long working life. Herein, support element 650 comprises antimony (k =18.5 W/(m*K) at 25°C) or chrome nickel steel (e.g., 18% Cr and 8% Ni by weight and with a thermal conductivity of about 16.3 W/(m*K) at 25°C). Otherwise, the support element 650 can comprise lead with a thermal conductivity of about 35 W/(m*K) at 25°C) or other metal with a similar thermal conductivity. Herein, the support element 650 can be made of a material with thermal conductivity less than copper or brass. The mounting base 651 can be made of an insulating material with a thermal conductivity that is less than the thermal conductivity of the support element 650. As such, the mounting base 651 can thermally insulate the support element 650.

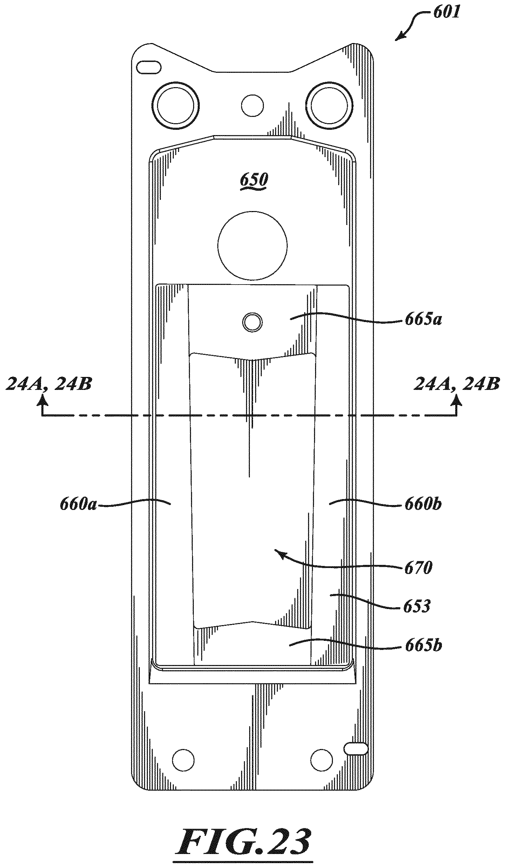

Figure 22 is a front, bottom, left side view of the slide holder platen 601. Figure 23 is a bottom view of the slide holder platen 601. The slide holder platen 601 can include the heating element 653, which can convert electrical energy to thermal energy and can include, without limitation, one or more traces, leads, resistive elements (e.g., active elements that produce thermal energy), fuses, or the like. Herein, the heating element 653 can be a resistive heater. Other types of heaters can also be used, if needed or desired. Herein, the heating element 653 can output thermal energy to the support element 650 to achieve a desired heat transfer pattern. Heat can be transferred non-uniformly to the slide 243 via the support element 650 to compensate for evaporative heat losses. Non-uniform heat transfer along the contact surface 679 may produce a non-uniform temperature profile along the contact surface 679. A generally uniform temperature profile can be produced across a processing zone 671 (Figure 21A) of slide 243. The processing zone 671 can be a staining region, a mounting region, or area of an upper or specimen-bearing surface 687 (Figure 21A) of the slide 243 suitable for carrying one or more specimen(s).

The heating element 653 of Figure 23 can include two elongate slide heating portions 660a, 660b (collectively 660) and two end heating portions 665a, 665b (collectively "665"). The elongate portions 660 deliver thermal energy to the longitudinally extending edge portions of the slide 243. The end heating portions 665 deliver thermal energy to the ends of the processing zone 671. The elongate portions 660 and the end heating portions 665 can be coupled together to form a multi-piece heating element 653. The elongate portions 660 and the end heating portions 665 can be made of materials with the same conductivity or different thermal conductivities. Each portion 660, 665 can be independently operated to output different amounts of thermal energy. Otherwise, the heating element 653 can have a one-piece construction with a uniform thickness or a variable thickness. The one-piece heating element 653 can be made of one material.

The elongate portions 660 and end heating portions 665 together define a convection cooling feature in the form of a pocket 670. The pocket 670 can help isolate heat in the support element 650 to help keep thermal energy at the location it is applied and can also help reduce or limit the thermal mass of the slide holder platen 601. The pocket 670 can be an opening with a substantially rectangular shape, as shown in Figure 23. However, the pocket 670 can have other shapes based on the desired heat distribution along the contact surface 679 of the support element 650.

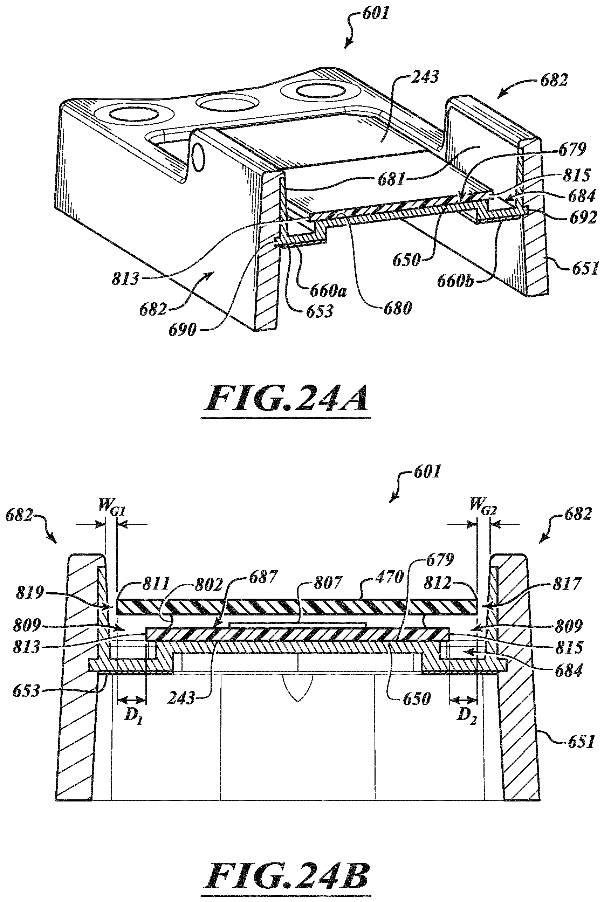

Figure 24A is a cross-sectional isometric view of the slide holder platen 601. The support element 650 includes the receiving region 680, sidewalls 682, and a channel 684. The receiving region 680 keeps the slide 243 spaced apart from fluids that can collect in the channel 684 during operation. The channel 684 can collect liquid that falls from edges 813, 815 of the slide 243. Herein, the slide 243 extends outwardly from the receiving region 680 a sufficient distance (e.g., 0.5mm, 0.75mm, 1mm, 2mm, 4mm, or 6mm) to prevent liquid from wicking between the slide 243 and the contact surface 679.

The slide holder platen 601 can be made in a multi-step manufacturing process. The support element 650 can be formed by a machining process, stamping process, or the like. The support element 650 can be over-molded to form the mounting base 651, which can be made of an insulating material molded using an injection molding process, compressing molding processes, or other suitable manufacturing processes. Exemplary non-limiting insulating materials include, without limitation, plastics, polymers, ceramics, or the like. The support element 650 and mounting base 651 can remain securely coupled together to inhibit or prevent liquids from traveling between the support element 650 and mounting base 651. For example, the interface between the supporting element 650 and the mounting base 651 can form a fluid-tight seal with or without utilizing any sealants. However, sealants, adhesives, and/or fasteners can be used to securely couple the support element 650 to the mounting base 651. The illustrated support element 650 includes locking features 690, 692 to help minimize, limit, or substantially prevent movement of the support element 650 relative to the mounting base 651.

Figure 24B is a cross-sectional view of the slide holder platen 601. The opposable 470 engages a liquid 802 which engages a specimen 807. The sidewalls 682 can extend vertically past the slide 243. The distance that the sidewalls 682 extend vertically past the slide 243 can be selected to manage (e.g., limit, minimize, substantially prevent, etc.) air currents that can cause heat losses via convection (e.g., convection via the surrounding air), evaporation, or the like. For example, the slide holder platen 601 and opposable 470 can moderate evaporation by keeping the evaporation rate of the liquid 802 at or below about 7 microliters per minute, 5 microliters per minute, 3 microliters per minute or other maximum evaporation rates. Herein, the slide holder platen 601 and opposable 470 can keep the evaporation rate of the liquid 802 within a range of about 7 microliters per minute to about 1 microliters per minute. Such arrangements can moderate evaporative losses. The sidewalls 682 and the opposable 470 help substantially thermally isolate the specimen from the surrounding environment. Additionally, the sidewalls 682 can heat the air proximate to the specimen to help prevent the liquid 802 from being cooled by surrounding air and to inhibit or help prevent condensation.

A side portion 811 of the opposable 470 extends outwardly past the edge 813 of the slide 243 such that the side portion 811 is closer to the sidewall 682 than the edge 813 of the slide 243. A width $W_{G1}$ of a gap 819 can be smaller than a distance $D_1$ from the side portion 811 to the slide edge 813. A side portion 812 of the opposable 470 extends outwardly past the edge 815. A width $W_{G2}$ of a gap 817 can be smaller than a distance $D_2$ from the side portion 812 to the slide edge 815. Herein, width $W_{G1}$ can be equal to or less than about 10%, 25%, or 50% of a distance between the left sidewall 682 and the edge 813. Similarly, width $W_{G2}$ can be equal to or less than about 10%, 25%, or 50% of a distance between the right sidewall 682 and the slide edge 815. The widths $W_{G1}$, $W_{G2}$ can be sufficiently small to inhibit or limit evaporative losses while allowing slight side-to-side movement of the opposable 470 to facilitate convenient handling. Herein, the widths $W_{G1}$, $W_{G2}$ can be equal to or less than about 1mm, 2mm, 4mm, or other suitable widths.

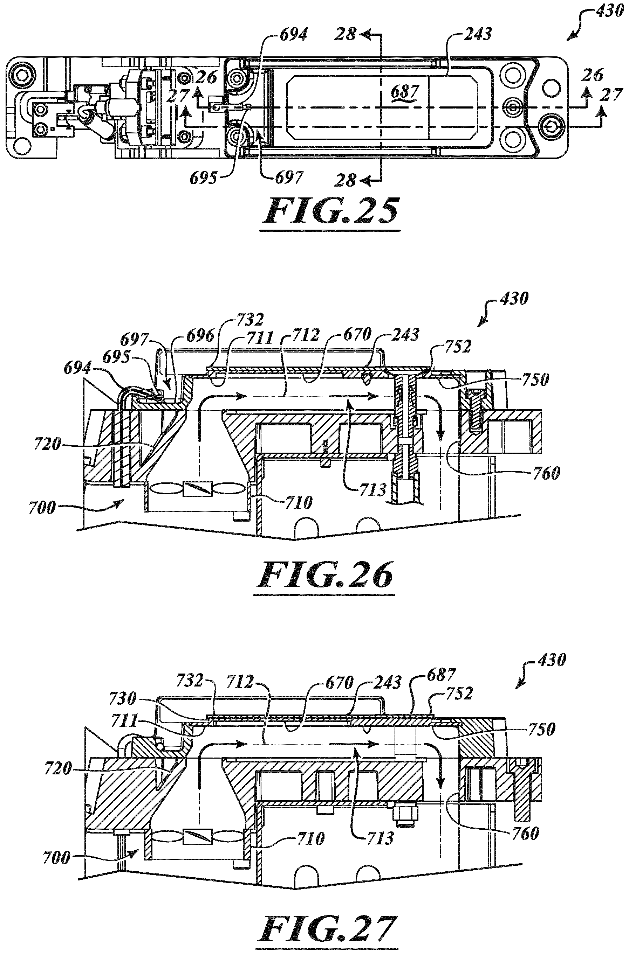

Figure 25 is a top plan view of the wetting module 430. Figure 26 is a cross-sectional view of a portion of the wetting module 430 taken along a line 26-26 of Figure 25. Figure 27 is a cross-sectional view of a portion of the wetting module 430 taken along a line 27-27 of Figure 25. Referring to Figures 25 and 26, a sensor 694 is positioned to detect liquid in a reservoir 697. The sensor 694 can include a thermistor element 695 positioned near a bottom 696 of the reservoir 697. When a sufficient volume of liquid is collected to contact the thermistor element 695, the sensor 694 sends a signal to the controller 144 (Figure 2). The detection of a threshold volume of liquid in the reservoir 697 can indicate a failure in the wetting module 430. Upon detection of a failure, the wetting module 430 can be disabled until the wetting module 430 can be, for example, inspected, cleaned, or otherwise maintained.

Referring to Figures 26 and 27, the wetting module 430 includes a convection system 700 that includes a flow generator 710, a duct 711, and a flow path 712 (illustrated in phantom line) defined by a passageway 713 of the duct 711. The flow generator 710 can include, without limitation, one or more fans, blowers, or other suitable components capable of generating a sufficient flow of a convection fluid (e.g., air, a refrigerant, etc.) along the flow path 712 to cool the back side of the support element 650, the slide 243, and/or items (e.g., specimens, reagents, or the like) carried on the slide 243.

The flow generator 710 can deliver the convection fluid towards an end 730 of the support element 650 located under a first end 732 of the slide 243. The convection fluid can travel vertically through a tapered section 720 that can accelerate the flow of convection fluid. The accelerated flow is directed horizontally and flows under the slide platen 601. The convection fluid can directly contact the support element 650 to facilitate and expedite cooling of the slide 243. For example, the convection fluid can flow into and along the pocket 670 to absorb thermal energy from the support element 650. The support element 650 absorbs thermal energy from the slide 243 to cool the upper surface 687 and to ultimately cool a liquid, specimen(s), or any other items or substances on the upper surface 687. The warmed fluid flows past the pocket 670 and proceeds under an end 750 of the support element 650 positioned underneath a label end 752 of the slide 243. The air flows downwardly through an outlet 760 to the surrounding environment.

The convection system 700 can be used to rapidly cool the slide 243. For example, the convection system 700 can help cool the liquid and/or specimen at a rate equal to or greater than about 2.5°C/sec. Herein, the temperature of a specimen can be at about 95°C and can be cooled to a temperature equal to or less than about 30°C in about four minutes or less. Other cooling rates can be achieved by increasing or decreasing the flow rate of the convection fluid, temperature of the convection fluid, or the like. During a heating cycle, the convention system 700 can be OFF, if desired.

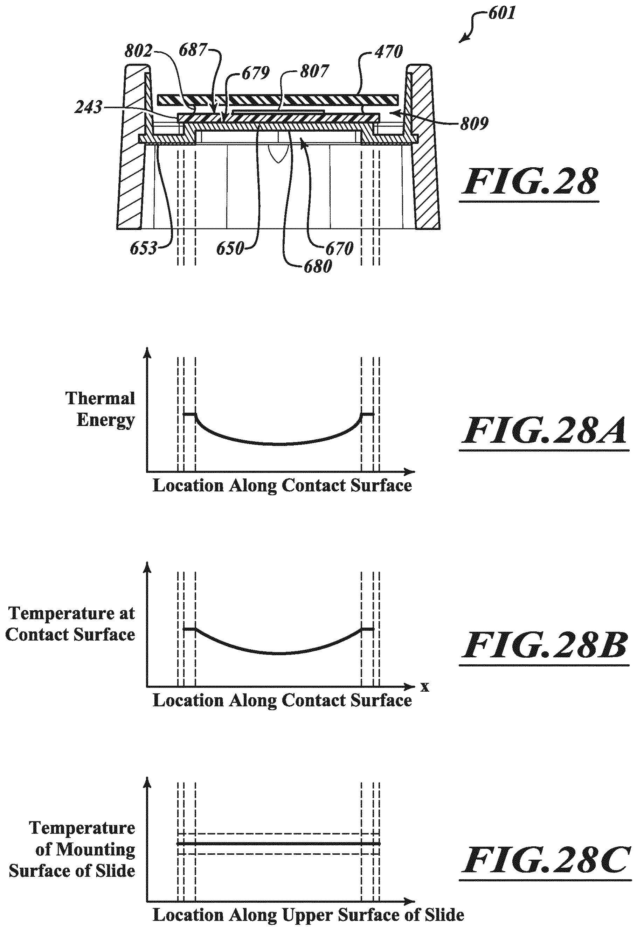

Figure 28 is a cross-sectional view of a portion of the slide holder platen 601 taken along a line 28-28 of Figure 25. The temperature of the liquid 802 can be maintained within a target temperature range selected based on the characteristics of the liquid 802, characteristics of a specimen (e.g., a thickness of the specimen, composition of the specimen, etc.), and the process to be performed. Because the regions of the liquid 802 nearest the edges of the slide 243 evaporate more than the central region of the liquid 802, the periphery of the slide 243 and the periphery of the liquid 802 tend to be at a lower temperature without compensation. The evaporative heat losses for high temperature processes (e.g., antigen retrieval) may be greater than the evaporative losses for low temperature processes (e.g., rinsing). Because significant temperature variations along the specimen 807 and/or the liquid 802 can lead to variations in processing, the wetting module 430 can maintain a desired temperature profile of the slide 243 by compensating for evaporative heat losses, including evaporative heat losses in high temperature and low temperature processes. The wetting module 430 can produce a substantially uniform temperature profile along the surface 687 to substantially uniformly heat the band of liquid 802 and/or the specimen 807. The uniform temperature profile can be maintained independently of changes in the surrounding environment to consistently process the entire specimen 807.

Figure 28A is a plot of the location along the width of the receiving region 680 versus thermal energy conducted to the slide 243. Figure 28B is a plot of the location along the width of the receiving region 680 versus a temperature of the contact surface 679 of the support element 650. Figure 28C is a plot of a location along the upper surface 687 of the slide 243. A comparison of Figures 28B and 28C shows that the temperature profile along the contact surface 679 of the support element 650 is different from the temperature profile along the upper surface 687 of the slide 243.

Referring to Figure 28A, the heating element 653 can non-uniformly transfer heat energy via conduction to the slide 243. The heat remains concentrated at the perimeter of the staining region where evaporative heat losses are relatively high. Because no heat energy is directly transferred via conduction to the portion of the support element 650 above the pocket 670, a non-uniform temperature profile is produced along the contact surface 679 of the support element 650 and can compensate for non-uniform heat losses associated with evaporation of the liquid 802. The compensation can produce a substantially uniform temperature profile along the upper slide surface 687. As shown in Figure 28C, a temperature along the upper slide surface 687 can be kept within a target temperature range (represented by two horizontal dashed lines). In an arrangement for antigen retrieval, the substantially uniform temperature profile can have a temperature variation that is equal to or less than 5% of the desired temperature and can be across most of the upper slide surface 687. The upper slide surface 687 can be kept at, for example, an average temperature or target temperature of about 95°C and within a range of about 90.25°C and about 99.75°C. Herein, the heater element 653 can produce less than about a 4% temperature variation across most of the upper slide surface 687. Otherwise, there can be less than 5% temperature variation across most of the upper slide surface 687. The upper slide surface 687 can be kept at, for example, an average temperature of about 95°C and within a range of about 92.63°C and about 97.38°C. Herein, an allowable temperature variation can be inputted by a user.

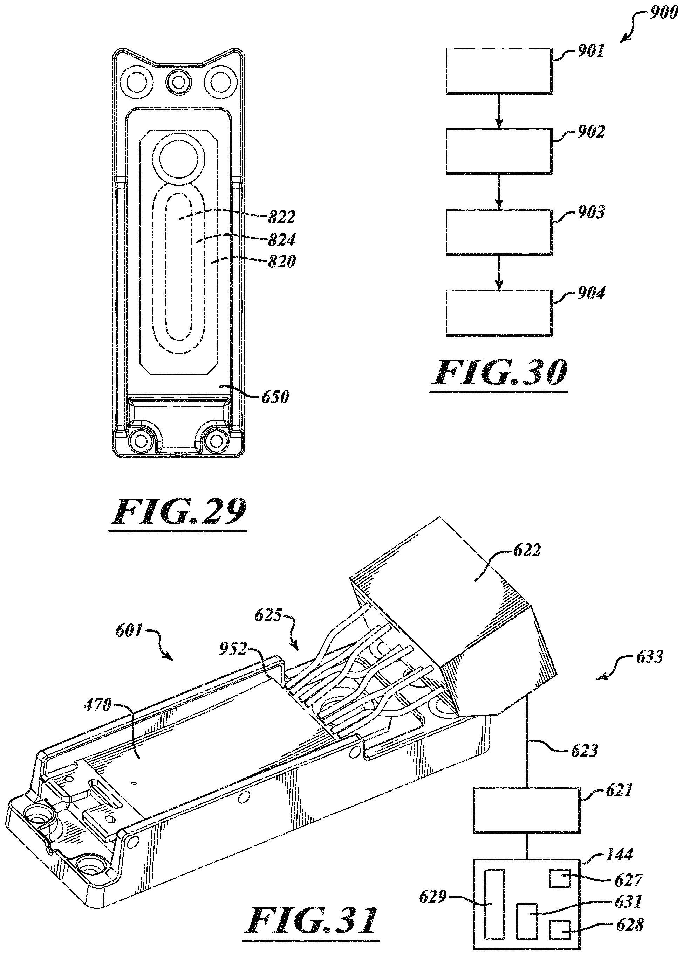

Figure 29 is a top view of heating zones. A high heating zone 820 surrounds an intermediate heating zone 824. The intermediate heating zone 824 surrounds a low heating zone 822. Heat from the heating element 653 primarily travels upwardly to define the high heating zone 820. The high heating zone 820 can be located underneath a perimeter of a staining area of the slide 243. The low heating zone 822 can generally correspond to the pocket 670 and the central processing area (e.g., a staining area) where one or more specimens are typically positioned. The temperature of the heating zones 820, 822, 824 can be generally inversely proportional to the rates of evaporation along the slide directly above that heating zone. For example, the low heating zone 822 can be positioned generally below the middle of the band of liquid 802 in which there is substantially no evaporative losses. The high heating zone 820 is positioned generally below the periphery of the band of liquid 802 that experiences relatively high evaporative losses.

Figure 30 is a flow chart illustrating a method 900 for heating the slide. At 901, the specimen-bearing slide 243 (Figure 21A) can be positioned on the contact surface 679 of the support element 650 (Figure 21B). The slide 243 can be preheated by the slide holder platen 601. A liquid can be delivered onto the heated slide 243. Alternatively, the slide holder platen 601 can heat the slide 243 after delivering the liquid.

At 902, the opposable 470 is used to manipulate the liquid and can mitigate and control evaporation, which in turn can affect temperature, concentration, and capillary volume. Herein, the liquid may be allowed to evaporate, resulting in heat losses and, further, changes in concentration of the liquid 802. A dispenser can deliver supplemental liquid at desired times to keep the volume of the liquid in a desired range, maintain a desired concentration of the liquid, or the like. If the current volume of the liquid is lower than the target equilibrium volume, the controller can instruct the dispenser to deliver liquid until the current volume of the liquid reaches the equilibrium volume. If the current volume of the liquid is higher than the target equilibrium volume, the controller can instruct the dispenser to stop delivering liquid until the current volume of the liquid reaches the equilibrium volume. Once the liquid reaches the target equilibrium volume, the controller can instruct the dispenser to provide the supplemental fluid to the liquid at a desired rate (e.g., a fixed rate or a variable rate), so as to maintain the liquid at the equilibrium volume. The delivery rate can be selected based on the evaporation rate of the liquid.

At 903, the contact surface 679 can have a non-uniform temperature profile such that the upper surface 687 of the slide 243 has a temperature profile that is more uniform than the non-uniform profile of the contact surface 679. Substantially the entire mounting area of the slide 243 can have a substantially uniform profile. This ensures that any portion of a specimen contacting the mounting surface is maintained at a generally uniform temperature for consistent processing. Even if specimens move slightly along the mounting surface, the specimens can be consistently processed.

At 904, heat losses associated with evaporation of the liquid 802 can be compensated for by producing the non-uniform temperature profile along the contact surface 679. The support element 650 and the heating sidewalls 682 can be used to control the temperature of the slide 243.

Fluid manipulated repeatedly across the staining surface results in fluid mixing between different regions within the body of fluid in contact with the slide surface in the sense of both mass as well as thermal energy mixing. Temperature uniformity control across the surface of the slide, therefore, is influenced by the interaction of 1) the conducting heating element under the slide, 2) thermal mixing resulting from fluid manipulation, and 3) evaporative heat loss with respect to the ambient environment. Fluid manipulation is controlled by such factors as manipulation speed and distance with respect to specified volumes. The thermal profile of the conducting element under the slide therefore must be designed appropriately for optimal on-slide temperature uniformity with respect to fluid manipulation factors. Figure 31 shows the slide holder platen 601, a dispenser assembly 633, and the controller 144 of an evaporation moderated specimen process station. The dispenser assembly 633 includes a fluid source 621 fluidically coupled to a dispenser 622 via a fluid line 623. The fluid source 621 can include, without limitation, one or more containers (e.g., a container taken from the parking station 124 of Figure 1, a container taken from the parking station 142 of Figure 1, etc.), reservoirs, or other suitable fluid sources (e.g., a bulk reagent reservoir) and can include one or more valves, pumps, or the like. The dispenser 622 can output liquid via an array of conduits 625. As illustrated in Figure 31, the dispenser 622 includes eight conduits 625, but any number of conduits can be used. Additionally, the dispenser assembly 633 can include more than one dispenser depending on the design of the slide holder platen 601. Additionally or alternatively, the dispensers 160, 162 of Figure 2 can deliver liquid onto the slides and can be fluidly coupled to the fluid source 621 or another fluid source. The opposable 470 can be positioned to allow one or both of the dispensers 160, 162 to deliver a liquid onto the slide. Herein, the dispenser 622 delivers a bulk liquid from the containers at the parking station 142 and the dispensers 160, 162 deliver liquid from containers at the parking station 140.

The controller 144 is capable of controlling an array of specimen processing stations to keep a volume of a processing liquid within an equilibrium volume range. If the volume of the liquid is above the equilibrium volume range, the liquid can evaporate at a relatively high rate and may significantly change the concentration of the liquid. If the volume of the liquid is below the equilibrium volume range, there may be an insufficient volume of liquid to adequately process the specimen. Additionally, an insufficient volume of liquid can result in an undesirably low amount of liquid agitation during processing. The equilibrium volume range can be selected based on the composition of the liquid, desired processing temperature, or desired agitation of the liquid 802. An equilibrium volume of the liquid 802 can correspond to a fluid volume (at a certain temperature or range of temperatures) that provides full coverage of the specimen while keeping evaporative losses below a target level. The dispenser 622 can function as a replenishment device that periodically supplements the liquid at a fixed rate (e.g., a rate based on the evaporation rate) to keep the volume of the liquid within the equilibrium volume range, replenish depleted reagent, or the like.

With the target processing temperature or target processing temperature range and a total evaporation rate, the controller 144 can determine a target range of equilibrium volumes. Herein, the controller 144 can receive the total evaporation rate information from a memory 629 and/or an input device 628. The input device 628 can include a data server or other similar device that can provide information from a database upon request or periodically. The total evaporation rate information can be obtained from an empirical study and stored in the database. Otherwise, the input device 628 can be a reader that obtains information (e.g., a target processing temperature, a target processing temperature range, replenishing rate, etc.) from a label of a slide.

The controller 144 can receive information (e.g., look-up tables, temperature set points, duty cycles, power settings, environmental information such as ambient temperatures and/or humidity, processing protocols, etc.) from the memory 629. The input device 628 can be a manual input device (e.g., a keyboard, a touch screen, or the like) or an automated input device (e.g., a computer, a data storage device, servers, network, etc.) that can provide information automatically upon request from the controller 144. The memory 629 can store different instructions for different processes. One stored sequence of program instructions can be used to contact the specimen 807 with a wash and another sequence of program instructions can be used to apply a reagent (e.g., a stain) to the specimen. The controller 144 can include a programmable processor 631 that executes the sequence of program instructions in order to sequentially process the specimen with the wash and reagent. The slide holder platen 601 can heat the slide to a first target temperature when executing the first sequence of program instructions and can cool the slide to a second target temperature when executing the second sequence of program instructions. Any number of sequences of program instructions can be executed to perform different stages of a protocol.

The controller 144 can also be programmed to control the wetting module 430 such that the dispenser 622 delivers the supplemental liquid onto the slide. The rate of fluid delivery can be based on, for example, processing information (e.g., protocol, agitation information, processing time(s), etc.), total evaporation rate information (e.g., evaporation rates under certain conditions, the actual evaporation rate for a certain type of liquid, etc.), or the like. The current volume of the liquid can be determined based on an initial volume of liquid on the slide and stored evaporation rate(s). The stored evaporation rates can be input into the system 100 or determined by the system 100. The controller 144 can calculate the equilibrium volume in advance (e.g., a pilot run), and the system 100 can use the determined equilibrium volume as the initial volume for the same kind of liquids. Then the controller 144 can instruct the dispenser 622 to provide the supplemental liquid at a rate (e.g., a rate determined by the pilot run). Herein, the roll speed can be about 100 mm/s to provide a generally uniform temperature profile. For example, a roll speed of 100 millimeters per second can provide a temperature range across the slide of about 4.2°C whereas a roll speed of 65 millimeters per second provides a temperature range of about 6.2°C. The rolling direction, the rolling speed, and the rolling frequency can be adjusted depending on the type of liquids and the desired temperature profile. The rolling speed can have a direct impact on the total evaporation rate. A faster rolling speed can lead to higher evaporation rates. When collecting empirical total evaporation volume information to generate protocols, this can be a factor that is considered.

A power source 627 of the controller 144 can be electrically coupled to a heating element (e.g., heating element 653 of Figures 24A and 24B). The power source 627 can be one or more batteries, fuel cells, or the like. The power source 627 can also deliver electrical energy to other components of the system. Otherwise, the power source 627 can be an AC power supply.

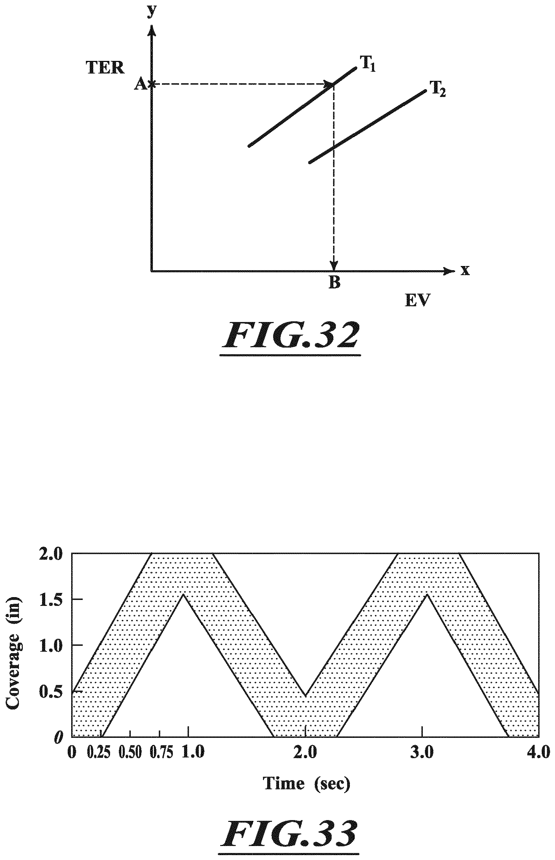

Figure 32 is a plot of equilibrium volume versus total evaporation rate of a processing liquid. The x-axis represents the equilibrium volume (EV, unit: μL), and the y-axis represents the total evaporation rate (TER, unit: μL/s). Lines T1 and T2 represent the relationships between the TER and the EV at temperature T1 and temperature T2, respectively. As illustrated, T1 is higher than T2. The controller 144 can receive the total evaporation rate information from the memory 629, the input device 628, or the like. The total evaporation rate information can be measured and stored in the memory 629. The total evaporation rate information can include evaporation rates for liquids at different concentrations. After the controller 144 receives the predetermined temperature (e.g., T1) and the total evaporation rate information (e.g., "A" μL/s), the controller 144 can determine the EV value (e.g., "B" μL) of the liquid based on the graph of Figure 32. Equation 1 corresponds to the relationships described in Figure 32. The slope of the lines T1 and T2 represent the temperature-dependent evaporation constant (K) below.

$$TER = K \; x \; EV \qquad \textit{Equation 1}$$

Once the equilibrium volume of the liquid is determined, the controller 144 can compare it with an estimated volume of the slide and can instruct the dispenser 622 to supply supplemental fluid if needed. If the current volume of the liquid is lower than the target equilibrium volume, the controller 144 can instruct the dispenser 622 to provide more supplemental liquid.

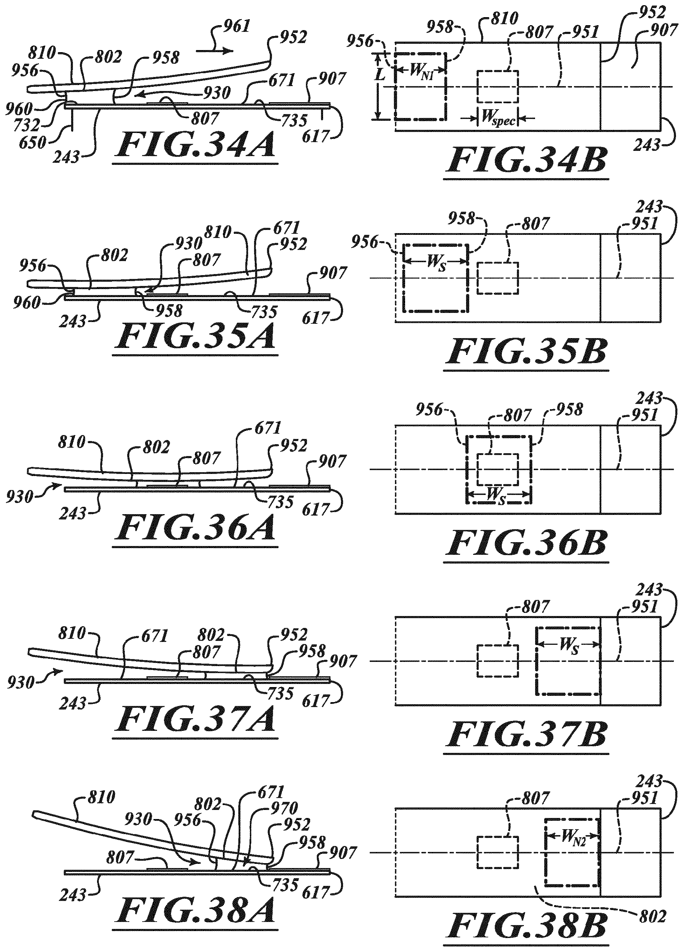

Figure 33 is a plot of time versus coverage of a slide. Figures 34A-38B illustrate one method of achieving the coverage depicted in Figure 33 by moving the liquid 802 along the entire staining area 671 (excluding a label 907 and some margin, if desired) to provide full coverage by being alternatingly moved between opposing ends 732, 735 of the mounting area 671. The full coverage can help minimize, limit, or substantially prevent problems associated with under-wetting and over-wetting. In under-wetting, the liquid 802 contacts less than the entire staining area 671 such that the specimen 807 may be at risk of not being contacted and thus not being treated/stained. In over-wetting, the liquid 802 contacts more than the entire staining area 671 and may tend to drain from the slide 243. The liquid 802 may be at risk of ineffective liquid removal in subsequent processes, resulting in reagent carryover and associated stain quality degradation. If the liquid 802 is a stain, the entire specimen 807 is contacted for consistent (e.g., uniform) staining. If the liquid 802 is a wash, full coverage ensures that the entire specimen 807 is thoroughly washed, especially after a reagent treatment. Different stages of the method are discussed in detail below.

Figures 34A and 34B are side and top views of the band of liquid 802 between the opposable 810 held by the opposable actuator (not shown) and the mounting area end 732 at time 0 in Figure 33. The opposable 810 and slide 243 form a band of liquid 802 (e.g., a meniscus layer, a thin film, or the like). The band of liquid 802 of Figure 34B is shown in phantom line. A gap 930 (e.g., a capillary gap) can have a minimum holding capacity of about 125 microliters to about 200 microliters. Other minimum and maximum holding capacities are possible, if needed or desired. The minimum holding capacity can be the smallest volume of liquid that can be contained in the gap 930 and effectively applied to the specimen 807, which may be located anywhere on the staining area 671. The maximum holding capacity is the largest volume of liquid that can be contained in the gap 930 without overfilling. The varying height gap 930 can accommodate a wider range of liquid volumes than a uniform height gap because the narrowed region of the gap 930 can accommodate a small liquid volume.

The opposable 810 is rolled along the slide 243 to displace the band of liquid 802 (indicated by an arrow 961) in the direction of a longitudinal axis 951 of the slide 243. In Figures 35A and 35B, the band of liquid 802 has been spread by moving a side 958 of the band of liquid 802 in the direction of the longitudinal axis 951 (corresponding to 0.25 seconds in Figure 33). A side 956 of the band of liquid 802 can remain at an edge 960 of the slide 243. Herein, the band of liquid 802 can be spread from a narrowed width $W_{N1}$ (Figure 34B) to a spread width Ws. The widths $W_{N1}$, $W_S$ can be substantially parallel to the longitudinal axis 951 of the slide 243, and the length L of the band of liquid 802 can be substantially perpendicular to the longitudinal axis 951.

Figures 36A and 36B show the band of liquid 802 after it has moved along the slide 243, corresponding to 0.5 second in Figure 33. The band of liquid 802 is displaced using capillary action. Capillary action can include, without limitation, movement of the band of liquid 802 due to the phenomenon of the liquid spontaneously creeping through the gap 930 due to adhesive forces, cohesive forces, and/or surface tension. Herein, the width $W_S$ can be generally maintained while displacing the band of liquid 802. Otherwise, the width $W_S$ may be increased or decreased less than 5% while moving the band of liquid 802. Herein, the opposable 810 can have a non-uniform curvature or configuration to have a variable width Ws as the band moves across the slide.

Figures 37A and 37B show the band of liquid 802 positioned at the end 735, corresponding to 0.75 second in Figure 33. The side 958 of the band of liquid 802 can be captivated between an end 952 of the opposable 810 and the end 735 of the mounting area 671. The label 907 can help captivate the liquid 802. For example, the label 907 can be made, in whole or in part, of a hydrophobic material. As the opposable 810 moves to an over-rolled position of Figure 38A, the width Ws of the band of liquid 802 can be decreased to a narrowed width $W_{N2}$, corresponding to 1 second in Figure 33. The width of the band of liquid 802 can be reduced while captivating substantially all of the liquid 802 at an end 970 of the gap 930. For example, at least 90% by volume of the liquid 802 can remain captivated. Herein, at least 95% by volume of the liquid 802 can remain captivated. Yet further, substantially all of the liquid 802 can remain captivated as the width of the band of liquid 802 is decreased.

The compressed width $W_{N2}$ can be substantially less than the width $W_S$ such that the entire narrowed band of liquid 802 is spaced apart from the specimen 807. Herein, the narrowed width $W_{N2}$ can be equal to or less than about 50%, 25%, or 10% of the width $W_S$. Such arrangements may be especially well suited to process slides carrying one or more specimens. A relatively large area of the staining area 671 is uncovered by the narrowed band while preventing wicking or escape of the liquid. Herein, the width $W_{N2}$ can be equal to or less than about 40%, 30%, or 20% of the width $W_S$. The width $W_{N1}$ can be generally equal to the width $W_{N2}$. Advantageously, the opposable actuator 525 can be operated to increase or decrease to provide variable narrowing of the band of liquid 802.

The opposable 810 of Figures 38A and 38B can be rolled back across the slide 243 to move the band of liquid 802 to the position shown in Figure 34A. The opposable 810 can be rolled back and forth any number of times at a variable rate or constant rate to move the liquid 802 back and forth across the slide 243. If the liquid 802 is a washing liquid, the washing liquid can be rapidly passed back and forth across the specimen 807 to provide thorough washing. If the liquid 802 is a stain, the band of liquid 802 can be passed back and forth across the specimen 807 to provide uniform staining across an entire width $W_{spec}$ (measured in a direction parallel to the longitudinal axis 951 of the slide 243) of the specimen 807. One or more wash cycles can be performed between staining cycles. On-slide mixing can also be performed, if needed or desired.

Processing protocols may require different rolling speeds and different liquid volumes in order to meet various processing criteria (e.g., chemical requirements, uptake requirements, solubility limitations, viscosity, or the like). If the specimen 807 is a paraffin embedded specimen, a relatively small volume of de-waxing solution (e.g., 12 microliters of xylene) can be delivered into the gap 930. The opposable 810 can be rolled (e.g., rolled along an imaginary plane spaced apart from the upper surface of the slide 243, rolled along the upper surface, rolled sideways, rolled longitudinally, or the like) or otherwise manipulated (e.g., rotated, translated, or both) to apply the liquid 802. After dewaxing, a relatively large volume of reagent can be delivered into the gap 930. For example, a volume of about 125 microliters to about 180 microliters of stain can be delivered into the gap 930. The stain is delivered to the specimen 807 and then subsequently removed.

The method shown in Figures 34A-38B can be used to perform assay steps (e.g., antibody and chromogen assays). The assay steps can be performed at relatively low temperatures. The slide holder platen 601 can keep the specimen and/or processing liquid at a temperature in a range of about 35°C to about 40°C. Herein, the liquid and/or specimen can be kept at a temperature of about 37°C. The dispenser (e.g., dispenser 622 of Figure 31) can deliver supplemental liquid to maintain a target volume of about 30 microliters to about 350 microliters. In some protocols, the dispenser delivers supplemental liquid at a rate of about 4 to about 5.1 microliters per minute to about 5.6 microliters per minute. Herein, the volume of the liquid (e.g., liquid 802 of Figure 10) can be kept in a range of about 90 microliters to about 175 microliters over about a 15 minute period based on a relative humidity of about 10%-90%, an ambient temperature of about 15°C to about 32°C, with an average slide temperature tolerance of about ± 1°C, and an opposable rolling speed of about 25 to 60 millimeters per second. The evaporation rate may be generally proportional to the rolling speed. If the rolling speed is about 20 millimeters per second, a replenish rate of about 3.8 microliters per minute to about 4.2 microliters per minute can maintain a volume of about 115 microliters to about 200 microliters. If the rolling speed is about 40 millimeters per second, a replenish rate of about 5.1 microliters per minute to about 5.6 microliters per minute can maintain a volume of the liquid 802 of about 115 microliters to about 200 microliters. At a high rolling speed of about 90 millimeters per second, the replenish rate can be about 7.6 microliters per minute to about 8.4 microliters per minute to maintain a volume of about 110 microliters to about 200 microliters. Higher speeds may be possible but are dependent upon the gap height, opposable radius, and fluid properties. Humidity and ambient temperatures can impact evaporation rates at low temperatures but may not have a significant impact at elevated temperatures of, for example, temperatures greater than 72°C.

For targeted retrieval, the rolling speed can be about 100 millimeters per second and the replenish rate can be 72 microliters per minute. For antigen retrieval, the rolling speed can be about 180 millimeters per second and the replenish rate can be about 105 microliters per minute. Other replenish rates can be selected based on the processing conditions.

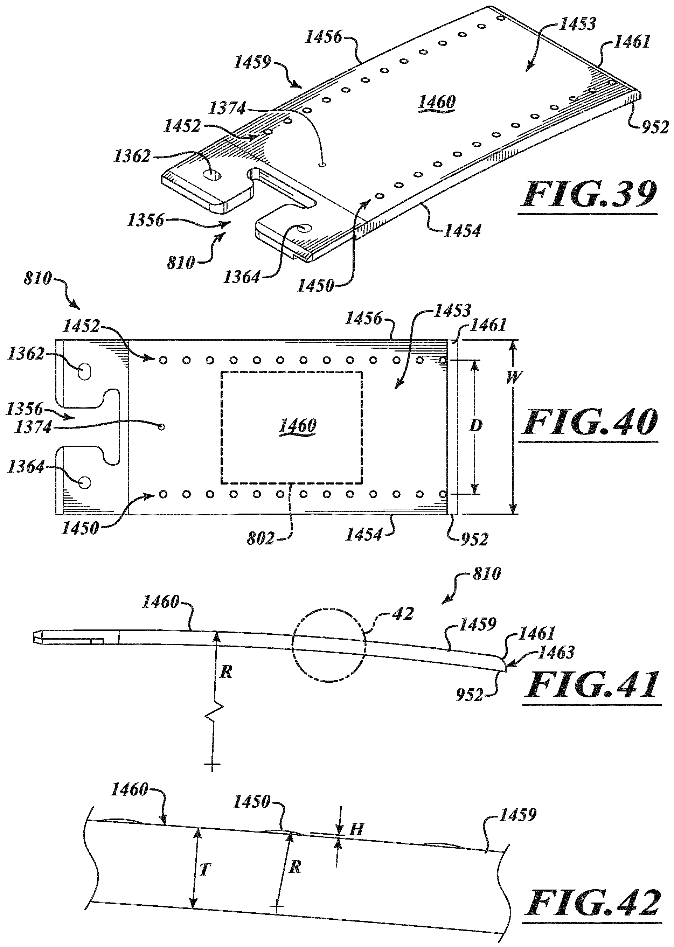

As used herein, the term "opposable element" is a broad term and refers to, without limitation, a surface, a tile, a strip, or another structure capable of manipulating one or more substances to process a specimen on a slide as described herein. The components of the system 100 (Figure 1) use a wide range of different types of opposable elements. Herein, the opposable element can include one or more spacers, gapping elements or other features for positioning the opposable element relative to a slide. Otherwise, the opposable element can have a smooth surface (e.g., a non-planer fluid-manipulating surface) that is substantially free of spacers, gapping elements, or the like and can have a monolayer construction or a multi-layer construction. The smooth surface can roll or otherwise travel along a slide. As discussed above, opposable elements can be moved relative to a stationary slide to manipulate a fluid. Otherwise, a slide may be moved relative to a stationary opposable element to manipulate a fluid. Yet otherwise, both a slide and an opposable element may be moved to manipulate a fluid. Additionally, two opposable elements can process specimens. For example, two opposable elements can be used to captivate and manipulate a fluid to process a specimen held between the opposable elements. The specimen can then be transferred to a slide or appropriate specimen carrier. The opposable 810 (Figures 34A and 34B) and opposable 2012 (Figure 46) are a non-limiting exemplary opposable elements and are discussed in detail in connection with Figures 39-56.

Figures 39-42 shows one example of the opposable 810. The opposable 810 can include a body 1459, a port 1374, and a slot 1356. The body 1459 includes a first row of gapping elements 1450, a second row of gapping elements 1452, and a specimen processing region 1453. When the specimen processing region 1453 faces a slide and interfaces with a liquid, the liquid can be removed via the port 1374. The slot 1356 can receive a feature of an opposable actuator. The body 1459 can also include keying features 1362, 1364 (e.g., holes, protrusions, etc.) used to align the opposable 810. The illustrated features 1362, 1364 are holes.

Figure 39 shows the specimen processing region 1453 between the two rows of gapping elements 1450, 1452. The opposable 810 has edges 1454, 1456 that can be dimensioned with respect to the slide to provide the desired processing region 1453 (e.g., the entire surface 1460 of the opposable 810, most of the upper surface 1460 of the opposable 810, the region between the gapping elements 1450, 1452, or the like).

Figure 40 shows en exemplary band of liquid 802 (illustrated in phantom line) positioned between the gapping elements 1450, 1452. The band of liquid 802 can move along the length of the opposable 810 without contacting the gapping elements 1450, 1452. The band of liquid 802 can be displaced without accumulation of liquid about any of the gapping elements 1450, 1452.

The gapping elements 1450, 1452 can help process a specimen with a desired amount of fluid (e.g., a minimal amount of fluid). The gapping elements 1450, 1452 can also be spaced apart from one another to reduce, limit, or substantially prevent wicking between adjacent elements. If the liquid 802 reaches one of the gapping elements 1450, 1452, the liquid 802 can reside at the contact interface between that gapping element and the slide without flowing to an adjacent gapping element. The gapping elements 1450, 1452 are spaced apart from the edges 1454, 1456 of the opposable 810 to keep the liquid proximate to the processing region 1453. Additionally, the liquid 802 is kept far enough away from the edges 1454, 1456 to prevent wicking out from underneath the opposable 810 even if another object contacts the edges 1454, 1456.

The rows of gapping elements 1450, 1452 extend longitudinally along a length of the opposable 810. Opposing gapping elements of each row of gapping elements 1450, 1452 are generally laterally aligned such that a slide can contact laterally aligned gapping elements 1450, 1452. As the opposable 810 is moved along the slide, the slide is successively brought into contact with laterally aligned gapping elements 1450, 1452.

Each of the rows of gapping elements 1450, 1452 can be generally similar to one another. Accordingly, the description of one of the rows of gapping elements 1450, 1452 applies equally to the other, unless indicated otherwise. The row of gapping elements 1450 can include about 5 gapping elements to about 60 gapping elements with an average distance between adjacent gapping elements in a range of about 0.05 inch (1.27 mm) to about 0.6 inch (15.24 mm). As illustrated in Figures 39 and 40, the row of gapping elements 1450 includes 19 gapping elements that protrude outwardly from the entire surface 1460. Otherwise, the row of gapping elements 1450 can include about 10 gapping elements to about 40 gapping elements. As viewed from above (see Figure 40), the row of gapping elements 1450 has a generally linear configuration. Otherwise, the row of gapping elements 1450 can have a zigzag configuration, serpentine configuration, or any other configuration or pattern.

The gapping elements 1450 can be evenly or unevenly spaced from one another. The distance between adjacent gapping elements 1450 can be greater than the heights of the gapping elements 1450 and/or less than a thickness T (Figure 42) of the body 1459 of the opposable 810. Other spacing arrangements are also possible, if needed or desired. Herein, the thickness T can be about 0.08 inch (2 mm). A width W between the edges 1454, 1456 can be in a range of about 0.6 inch (15.24 mm) to about 1.5 inch (38 mm). Herein, the width W can be about 1.2 inches (30 mm) and the edges 1454, 1456 can be substantially parallel. Other widths are also possible.

Referring to Figure 40, a distance D between the rows 1450, 1452 can be selected based on the dimensions of the specimen and the dimensions of the slide. Herein, the distance D can be in a range of about 0.25 inch (6.35 mm) to about 1 inch (25 mm). If the slide is a standard microscope slide, the distance D can be less than about 0.5 inch (12.7 mm).

Figure 42 shows one of the gapping elements 1450. The height H of the gapping element 1450 can be selected based on the ability to manipulate fluid. The gapping element 1450 can have a height H equal to or less than about 0.0015 inch (0.038 mm) if the specimen is a tissue section with a thickness that is less than about 0.0015 inch (0.038 mm). The minimum height of the capillary gap (e.g., gap 930 of Figures 34A-38B) can be equal to 0.0015 inch (0.038 mm) if the gapping elements 1450 contact the slide. Herein, the height H can be in a range of about 0.001 inch (0.025 mm) to about 0.005 inch (0.127 mm). Further, the height H may be about 0.003 inch (0.076 mm) (e.g., 0.003 inch ± 0.0005 inch) to process thin tissue sections with a thickness less than about 30 microns, 20 microns, or 10 microns.

The pattern, number, dimensions, and configurations of the gapping elements 1450, 1452 can be selected based on the desired interaction between the specimen and the liquid. If the opposable 810 includes a field of gapping elements, the gapping elements can be distributed evenly or unevenly across the opposable 810 to form different patterns that may include, without limitation, one or more rows, arrays, geometric shapes, or the like.

The gapping element 1450 can be a partially spherical dimple, partially elliptical dimple, or the like. The illustrated gapping element 1450 is a substantially partially spherical dimple. If the specimen is sufficiently large or moves towards one side of the slide, the gapping element 1450 in the form of a dimple can slide over the specimen without damaging or dislodging the specimen to the slide. Otherwise, the gapping element 1450 can be in the form of a polyhedron protrusion, a conical protrusion, a frustoconical protrusion, or another combination of polygonal and arcuate shapes.

The body 1459 of Figure 41 is in the shape of a simple arc with a radius of curvature R in a range of about 2 inches (5 cm) to about 30 inches (76 cm). Herein, the radius of curvature R can be about 15 inches (38 cm) or about 20 inches (74 cm). The nominal radius of the profile deviation can be equal to or less than about 0.1 inch. The actual radius of the profile can deviate less than about 0.01 inch. Such arrangements are well suited to produce a liquid band having a generally rectangular shape, as viewed from above, and also spanning the width of the slide and, for a particular volume, having a low variance in length along the slide. The radius of curvature R can be selected based on the number of specimens to be processed, the amount of fluid agitation, the properties of the processing liquids, the height of gapping elements 1450, 1452, and the like. Otherwise, the opposable 810 is in the shape of a complex arc (e.g., an elliptical arc), a compound arc, or the like. Yet otherwise, the opposable 810 can be substantially planar. The surface across the width W can be generally straight.

The opposable 810 can be made, in whole or in part, of polymers, plastics, elastomers, composites, ceramics, glass, or metals, as well as any other material that is chemically compatible with the processing fluids and specimen. Exemplary plastics include, without limitation, polyethylene (e.g., high density polyethylene, linear low density polyethylene, blends, or the like), polyvinylidene fluoride (PVDF), polytetrafluoroethylene (PTFE), perfluoroalkoxy (PFA), or combinations thereof. Herein, the opposable 810 can be made of a single material. Otherwise, different portions of the opposable 810 are made of different materials. If the opposable 810 is disposable, it can be made, in whole or in part, of a relatively inexpensive material. If the opposable 810 is rigid, it can be made, in whole or in part, of polycarbonate, urethane, polyester, a metal coated plate, or the like.

Referring again to Figure 41, the end 952 includes a captivation feature in the form of a tapered region 1461. The tapered region 1461 is positioned to captivate the band of liquid. As the opposable 810 is overrolled, the band of liquid can contact and cling to the tapered region 1461. A curved surface 1463 provides a large surface area to which the liquid can cling. The illustrated tapered region 1461 has a radius of curvature equal to or less than about 0.08 inch to cooperate with a standard microscope slide to captivate a band of liquid. Other radii of curvature can also be used, if needed or desired. Herein, the curvature of the rounded edge 1461 can be uniform across the width W of the opposable 810. Otherwise, the curvature of the rounded edge can vary across the width W of the opposable 810.

The opposable 810 can be disposable to prevent cross-contamination. As used herein, the term "disposable" when applied to a system or component (or combination of components), such as an opposable element, a processing liquid, or the like, is a broad term and generally means, without limitation, that the system or component in question is used a finite number of times and is then discarded. Some disposable components, such as an opposable element, are used only once and are then discarded. Herein, multiple components of a processing apparatus may be disposable to further prevent or limit carryover contamination. Otherwise, the components can be non-disposable and can be used any number of times. For example, opposable elements that are non-disposable may be subjected to different types of cleaning and/or sterilization processes without appreciably altering the characteristics of the opposable element.

The slides disclosed herein can be a 1 inch x 3 inch microscope slide, a 25 mm x 75 mm microscope slide, or another type of flat or substantially flat substrate. "Substantially flat substrate" refers, without limitation, to any object having at least one substantially flat surface, but more typically to any object having two substantially flat surfaces on opposite sides of the object, and even more typically to any object having opposed substantially flat surfaces, which opposed surfaces are generally equal in size but larger than any other surfaces on the object. Herein, the substantially flat substrate can comprise any suitable material, including plastics, rubber, ceramics, glass, silicon, semiconductor materials, metals, combinations thereof, or the like. Non-limiting examples of substantially flat substrates include flat covers, SELDI and MALDI chips, silicon wafers, or other generally planar objects with at least one substantially flat surface.

From the foregoing, it will be appreciated that specific embodiments of the invention have been described herein for purposes of illustration, but well-known structures and functions have not been shown or described in detail to avoid unnecessarily obscuring the description of at least some embodiments of the invention. The systems described herein can perform a wide range of processes for preparing biological specimens for analyzing. Where the context permits, singular or plural terms may also include the plural or singular term, respectively. Unless the word "or" is associated with an express clause indicating that the word should be limited to mean only a single item exclusive from the other items in reference to a list of two or more items, then the use of "or" in such a list shall be interpreted as including (a) any single item in the list, (b) all of the items in the list, or (c) any combination of the items in the list. The singular forms "a," "an," and "the" include plural referents unless the context clearly indicates otherwise. Thus, for example, reference to "a specimen" refers to one or more specimens, such as two or more specimens, three or more specimens, or four or more specimens.

The various examples described above can be combined to provide further examples. The embodiments, features, systems, devices, materials, methods, and techniques described herein may be similar to any one or more of the features, systems, devices, materials, methods, and techniques described in U.S. Patent Application No. 13/509,785; U.S. Patent Application No. 13/509,785; U.S. Patent Application No. 13/157,231; U.S. Patent No. 7,468,161; and International App. No. PCT/US2010/056752. In addition, the features, systems, devices, materials, methods, and techniques described herein may be applied to or used in connection with any one or more of the features, systems, devices, materials, methods, and techniques disclosed in the above-mentioned International App. No. PCT/US2010/056752; U.S. Patent Application No. 13/509,785; U.S. Patent Application No. 13/509,785; U.S. Patent No. 8,296,809; and U.S. Patent No. 7,468,161. Aspects of the disclosed examples can be modified, if necessary, to employ concepts of the various patents, applications, and publications to provide yet further examples.

**Claims**

1.  A slide processing apparatus for processing a specimen (807) carried by a slide (243), comprising:

    a staining module including

    > a slide holder platen (601) having a first sidewall (682), a second sidewall (682), and a slide receiving region (680) between the first sidewall (682) and the second sidewall (682),
    > a slide (243) positioned on the slide receiving region (680), the slide (243) including a first edge (813) and an opposing second edge (815),
    > an opposable element (470) disposed proximate to the slide (243) and including a first edge (811) and an opposing second edge (812), and

    an opposable actuator (525) for holding the opposable element (470),

    wherein the opposable element (470) forms a capillary gap between the opposable element (470) and the slide (243), the first edge (811) of the opposable element (470) being closer to the first sidewall (682) than the first edge (813) of the slide (243), and the second edge (812) of the opposable element (470) being closer to the second sidewall (682) than the second edge (815) of the slide (243),
    wherein a width $W_{G1}$ of a first gap (819) between the first edge (811) of the opposable element (470) and the first sidewall (682) is smaller than the distance $D_1$ between the first edge (811) of the opposable element (470) to the first edge (813) of the slide (243), and a width $W_{G2}$ of a second gap (817) between the second edge (812) of the opposable element (470) to the second sidewall (682) is smaller than the distance $D_2$ between the second edge (812) of the opposable element (470) to the second edge (815) of the slide (243),
    **characterized in
    that** the slide (243) extends outwardly from the slide receiving region (680).

2.  The slide processing apparatus of claim 1, further comprising:

    a dispenser (622) positioned to deliver a supplemental liquid (802) between the opposable element (470) and the slide (243) while a liquid (802) is held in the capillary gap, and
    a controller (144) communicatively coupled to the dispenser (622) and programmed to command the dispenser (144) such that the dispenser (622) delivers the supplemental liquid (802) to keep a volume of the liquid (802) between the opposable element (470) and the slide (243) within an equilibrium volume range.

3.  The slide processing apparatus of claim 1, wherein the width $W_{G1}$ of the first gap (819) is less than 50% of the distance between the first sidewall (682) and the first edge (813) of the slide (243).

4.  The slide processing apparatus of claim 3, wherein the width $W_{G2}$ of the second gap (817) is less than 50% of the distance between the second sidewall (682) and the second edge (815) of the slide (243).

5.  The slide processing apparatus of claim 1 wherein the staining module includes at least one heating element (653) positioned to conductively heat the first sidewall (682), the second sidewall (682), or both.

**6.** A system for processing a specimen (807) carried by a slide (243), comprising:

a specimen processing station including

a slide processing apparatus of claim 1 for processing a specimen (807) carried by a slide (243), wherein a slide holder platen (601) includes a slide support region, the slide holder platen (601) being configured to heat a liquid on a slide (243) at the slide support region (650) while an opposable element (470) held by an opposable actuator (525) contacts and moves the liquid (802) along the slide (243), and
a replenishment device configured to deliver a supplemental liquid (802) between the opposable element and the slide (243); and

a controller (144) programmed to control the specimen processing station such that the replenishment device delivers the supplemental liquid (802) at a replenishing rate to compensate for evaporative losses of the liquid (802), wherein the controller (144) is programmed to control the specimen processing station to move the opposable element (470) while the opposable element (470) engages the liquid (802) on the slide (243).

**7.** The system of claim 6, wherein the controller (144) includes:

a memory (629) for storing a first sequence of program instructions and a second sequence of program instructions; and
a programmable processor (631) configured to execute the first sequence of program instructions in order to process a specimen (807) on the slide (243) with a first liquid (802) and configured to execute the second sequence of program instructions to process the specimen (807) with a second liquid (802) that is different from the first liquid (802).

**8.** The system of claim 7, wherein the programmable processor (631) is configured to execute the first sequence of program instructions in order to heat the slide (243) to a first temperature using the slide holder platen (601), the controller (144) is configured to execute the second sequence of program instructions in order to heat the slide (243) to a second temperature using the slide holder platen (601), and the second temperature is different from the first temperature.

**9.** The system of claim 6, wherein the controller (144) is configured to execute a first sequence of program instructions to command the replenishment device to deliver a first liquid (802) to the slide (243) at a first rate, and the controller (144) is configured to execute a second sequence of program instructions to command the replenishment device to deliver a second liquid (802) to the slide (243) at a second rate that is different from the first rate.

**10.** The system of claim 9, wherein the first rate corresponds to an evaporation rate of the first liquid (802), and the second rate corresponds to an evaporation rate of the second liquid (802).

**11.** The system of claim 6, wherein the controller (144) includes a memory (629) that stores a replenishment program executable by the controller (144) in order to keep a volume of the liquid on the slide (243) within an equilibrium volume range.

**12.** The system of claim 11, wherein the controller (144) is programmed to command the specimen processing station to keep a volume of the liquid (802) between a maximum equilibrium volume corresponding to an over-wetting condition and a minimum equilibrium volume corresponding to an under-wetting condition.

**13.** The system of claim 6, wherein the controller (144) is programmed to command the specimen processing station to

move a volume of the liquid (802) across a specimen (807) held on the slide (243) by moving an opposable element (470) held by the opposable actuator (525) relative to the slide (243); and

deliver the supplemental liquid (802) from the replenishment device to generally compensate for a decrease in the volume of the liquid (802) due to evaporation.

**14.** The system of claim 6, wherein the controller (144) is configured to receive reference evaporation rate information for the liquid (802) from a memory (629) and to control the specimen processing station based on the reference evaporation rate information.

**15.** The system of claim 6, wherein the controller (144) is programmed to command the specimen processing station such that the replenishment device provides the supplemental liquid (802) at a rate selected based on an evaporation rate of the liquid (802).

**16.** The system of claim 6, wherein a temperature profile along a contact surface (679) of the support element (650) is different from the temperature profile along an upper surface (687) of the slide (243).

**17.** A method of processing a specimen (807) on a slide (243), the method comprising using the system of claim 6 for processing a specimen (807) carried by a slide (243), the method further comprising:

moving a liquid (802) along a slide (243) using an opposable element (470) contacting the liquid (802);

controlling a temperature of the liquid (802) on the slide (243) while moving the liquid (802);

evaluating at least one of a volume of the liquid (802) and/or a total evaporation rate of the liquid (802); and

delivering a supplemental liquid (802) onto the slide (243) based on the evaluation to keep a volume of the liquid (802) on the slide (243) within an equilibrium volume range.

18. The method of claim 16, wherein evaluating the at least one of the volume of the liquid (802) and/or the total evaporation rate of the liquid (802) includes receiving the volume of the liquid (802) and the total evaporation rate of the liquid (802) from a memory (629).

**Patentansprüche**

1. Objektträgerverarbeitungsvorrichtung zur Verarbeitung einer Probe (807), die von einem Objektträger (243) getragen wird, umfassend:

ein Färbemodul mit

einer Objektträgerhalteplatte (601) mit einer ersten Seitenwand (682), einer zweiten Seitenwand (682) und einer Objektträgeraufnahmeregion (680) zwischen der ersten Seitenwand (682) und der zweiten Seitenwand (682),

einem Objektträger (243), der auf der Objektträgeraufnahmeregion (680) platziert ist, wobei der Objektträger (243) einen ersten Rand (813) und einen gegenüberliegenden zweiten Rand (815) aufweist,

ein entgegenstellbares Element (470), das neben dem Objektträger (243) angeordnet ist und einen ersten Rand (811) und einen gegenüberliegenden zweiten Rand (812) aufweist, und

ein entgegenstellbares Stellglied (525) zum Halten des entgegenstellbaren Elements (470),

wobei das entgegenstellbare Element (470) einen Kapillarspalt zwischen dem entgegenstellbaren Element (470) und dem Objektträger (243) bildet, wobei der erste Rand (811) des entgegenstellbaren Elements (470) näher bei der ersten Seitenwand (682) als der erste Rand (813) des Objektträgers (243) liegt und der zweite Rand (812) des entgegenstellbaren Elements (470) näher bei der zweiten Seitenwand (682) als der zweite Rand (815) des Objektträgers (243) liegt,

wobei eine Breite $W_{G1}$ eines ersten Spalts (819) zwischen dem ersten Rand (811) des entgegenstellbaren Elements (470) und der ersten Seitenwand (682) kleiner als der Abstand $D_1$ zwischen dem ersten Rand (811) des entgegenstellbaren Elements (470) und dem ersten Rand (813) des Objektträgers (243) ist, und eine Breite $W_{G2}$ eines zweiten Spalts (817) zwischen dem zweiten Rand (812) des entgegenstellbaren Elements (470) und der zweiten Seitenwand (682) kleiner als der Abstand $D_2$ zwischen dem zweiten Rand (812) des entgegenstellbaren Elements (470) und dem zweiten Rand (815) des Objektträgers (243) ist,

**dadurch gekennzeichnet, dass**

sich der Objektträger (243) von der Objektträgeraufnahmeregion (680) nach außen erstreckt.

2. Objektträgerverarbeitungsvorrichtung nach Anspruch 1, ferner umfassend:

eine Ausgabevorrichtung (622), die zur Abgabe einer Ergänzungsflüssigkeit (802) zwischen dem entgegenstellbaren Element (470) und dem Objektträger (243) platziert ist, während eine Flüssigkeit (802) im Kapillarspalt gehalten wird, und

einen Kontroller (144), der kommunikativ mit der Ausgabevorrichtung (622) verbunden ist und dazu programmiert ist, der Ausgabevorrichtung (144) solche Befehle zu erteilen, dass die Ausgabevorrichtung (622) die Ergänzungsflüssigkeit (802) abgibt, um ein Volumen der Flüssigkeit (802) zwischen dem entgegenstellbaren Element (470) und dem Objektträger (243) innerhalb eines Gleichgewichtsvolumenbereichs zu halten.

3. Objektträgerverarbeitungsvorrichtung nach Anspruch 1, wobei die Breite $W_{G1}$ des ersten Spalts (819) weniger als 50% des Abstands zwischen der ersten Seitenwand (682) und dem ersten Rand (813) des Objektträgers (243) beträgt.

4. Objektträgerverarbeitungsvorrichtung nach Anspruch 3, wobei die Breite $W_{G2}$ des zweiten Spalts (817) weniger als 50% des Abstands zwischen der zweiten Seitenwand (682) und dem zweiten Rand (815) des Objektträgers (243) beträgt.

**5.** Objektträgerverarbeitungsvorrichtung nach Anspruch 1, wobei das Färbemodul mindestens ein Heizelement (653) aufweist, das zur konduktiven Erwärmung der ersten Seitenwand (682), der zweiten Seitenwand (682) oder von beiden platziert ist.

**6.** System zur Verarbeitung einer Probe (807), die von einem Objektträger (243) getragen wird, umfassend:

eine Probenverarbeitungsstation enthaltend

eine Objektträgerverarbeitungsvorrichtung nach Anspruch 1 zur Verarbeitung einer Probe (807), die von einem Objektträger (243) getragen wird, wobei eine Objektträgerhalteplatte (601) eine Objektträgerstützregion aufweist, wobei die Objektträgerhalteplatte (601) dazu ausgelegt ist, eine Flüssigkeit auf einem Objektträger (243) an der Objektträgerstützregion (650) zu erwärmen, während ein entgegenstellbares Element (470), das von einem entgegenstellbaren Stellglied (525) gehalten wird, die Flüssigkeit (802) berührt und entlang des Objektträgers (243) bewegt, und eine Auffüllvorrichtung, die zur Abgabe einer Ergänzungsflüssigkeit (802) zwischen dem entgegenstellbaren Element und dem Objektträger (243) ausgelegt ist; und

einen Kontroller (144) der dazu programmiert ist, die Probenverarbeitungsstation so zu steuern, dass die Auffüllvorrichtung die Ergänzungsflüssigkeit (802) mit einer Auffüllrate zur Kompensation von Verdunstungsverlusten der Flüssigkeit (802) abgibt, wobei der Kontroller (144) dazu programmiert ist, die Probenverarbeitungsstation zur Bewegung des entgegenstellbaren Elements (470) zu steuern, während das entgegenstellbare Element (470) die Flüssigkeit (802) auf dem Objektträger (243) erfasst.

**7.** System nach Anspruch 6, wobei der Kontroller (144) das Folgende aufweist:

einen Speicher (629) zum Speichern einer ersten Sequenz von Programmanweisungen und einer zweiten Sequenz von Programmanweisungen; und einen programmierbaren Prozessor (631), der zum Ausführen der ersten Sequenz von Programmanweisungen ausgelegt ist, um eine Probe (807) auf dem Objektträger (243) mit einer ersten Flüssigkeit (802) zu verarbeiten, und der zum Ausführen der zweiten Sequenz von Programmanweisungen ausgelegt ist, um die Probe (807) mit einer zweiten Flüssigkeit (802), die sich von der ersten Flüssigkeit (802) unterscheidet, zu verarbeiten.

**8.** System nach Anspruch 7, wobei der programmierbare Prozessor (631) zum Ausführen der ersten Sequenz von Programmanweisungen ausgelegt ist, um den Objektträger (243) unter Verwendung der Objektträgerhalteplatte (601) auf eine erste Temperatur zu erwärmen, der Kontroller (144) zum Ausführen der zweiten Sequenz von Programmanweisungen ausgelegt ist, um den Objektträger (243) unter Verwendung der Objektträgerhalteplatte (601) auf eine zweite Temperatur zu erwärmen, und sich die zweite Temperatur von der ersten Temperatur unterscheidet.

**9.** System nach Anspruch 6, wobei der Kontroller (144) zum Ausführen einer ersten Sequenz von Programmanweisungen ausgelegt ist, um der Auffüllvorrichtung zu befehlen, eine erste Flüssigkeit (802) mit einer ersten Rate an den Objektträger (243) abzugeben, und der Kontroller (144) zum Ausführen einer zweiten Sequenz von Programmanweisungen ausgelegt ist, um der Auffüllvorrichtung zu befehlen, eine zweite Flüssigkeit (802) mit einer zweiten Rate, die sich von der ersten Rate unterscheidet, an den Objektträger (243) abzugeben.

**10.** System nach Anspruch 9, wobei die erste Rate einer Verdunstungsrate der ersten Flüssigkeit (802) entspricht und die zweite Rate einer Verdunstungsrate der zweiten Flüssigkeit (802) entspricht.

**11.** System nach Anspruch 6, wobei der Kontroller (144) einen Speicher (629) aufweist, in dem ein Auffüllprogramm gespeichert ist, das vom Kontroller (144) ausführbar ist, um ein Volumen der Flüssigkeit auf dem Objektträger (243) innerhalb eines Gleichgewichtsvolumenbereichs zu halten.

**12.** System nach Anspruch 11, wobei der Kontroller (144) dazu programmiert ist, der Probenverarbeitungsstation zu befehlen, ein Volumen der Flüssigkeit (802) zwischen einem maximalen Gleichgewichtsvolumen, das einem Überbenetzungszustand entspricht, und einem minimalen Gleichgewichtsvolumen, das einem Unterbenetzungszustand entspricht, zu halten.

**13.** System nach Anspruch 6, wobei der Kontroller (144) dazu programmiert ist, der Probenverarbeitungsstation zu befehlen ein Volumen der Flüssigkeit (802) über eine auf dem Objektträger (243) gehaltene Probe (807) durch Bewegen eines entgegenstellbaren Elements (470), das von dem entgegenstellbaren Stellglied (525) gehalten wird, relativ zum Objektträger (243) zu bewegen; und die Ergänzungsflüssigkeit (802) aus der Auffüllvorrichtung abzugeben, um eine Abnahme des Volumens der Flüssigkeit (802) aufgrund von Verdunstung allgemein zu kompensieren.

14. System nach Anspruch 6, wobei der Kontroller (144) dazu ausgelegt ist, Informationen über eine Bezugsverdunstungsrate für die Flüssigkeit (802) von einem Speicher (629) zu empfangen und die Probenverarbeitungsstation auf Basis der Informationen über die Bezugsverdunstungsrate zu steuern.

15. System nach Anspruch 6, wobei der Kontroller (144) dazu programmiert ist, der Probenverarbeitungsstation solche Befehle zu erteilen, dass die Auffüllvorrichtung die Ergänzungsflüssigkeit (802) mit einer Rate bereitstellt, die auf Basis der Verdunstungsrate der Flüssigkeit (802) gewählt wurde.

16. System nach Anspruch 6, wobei sich ein Temperaturprofil entlang einer Kontaktfläche (679) des Stützelements (650) vom Temperaturprofil entlang einer Oberseite (687) des Objektträgers (243) unterscheidet.

17. Verfahren zur Verarbeitung einer Probe (807) auf einem Objektträger (243), wobei das Verfahren das Verwenden des Systems nach Anspruch 6 zur Verarbeitung einer Probe (807), die vom einem Objektträger (243) getragen wird, umfasst, wobei das Verfahren ferner das Folgende umfasst:

das Bewegen einer Flüssigkeit (802) entlang eines Objektträgers (243) unter Verwendung eines entgegenstellbaren Elements (470), das die Flüssigkeit (802) berührt;
das Steuern einer Temperatur der Flüssigkeit (802) auf dem Objektträger (243) während der Bewegung der Flüssigkeit (802);
das Evaluieren mindestens eines von einem Volumen der Flüssigkeit (802) und/oder einer Gesamtverdunstungsrate der Flüssigkeit (802); und
das Abgeben einer Ergänzungsflüssigkeit (802) auf den Objektträger (243) auf Basis der Evaluierung, um ein Volumen der Flüssigkeit (802) auf dem Objektträger (243) innerhalb eines Gleichgewichtsvolumenbereichs zu halten.

18. Verfahren nach Anspruch 16, wobei die Evaluierung des mindestens einen des Volumens der Flüssigkeit (802) und/oder der Gesamtverdunstungsrate der Flüssigkeit (802) das Empfangen des Volumens der Flüssigkeit (802) und der Gesamtverdunstungsrate der Flüssigkeit (802) von einem Speicher (629) umfasst.

## Revendications

1. Appareil de traitement à lame pour traiter un échantillon (807) porté par une lame (243), comprenant:

un module de coloration, comprenant:

une plaque de support de lame (601) présentant une première paroi latérale (682), une seconde paroi latérale (682) et une région de réception de lame (680) entre la première paroi latérale (682) et la seconde paroi latérale (682),
une lame (243) positionnée sur la région de réception de lame (680), la lame (243) présentant un premier bord (813) et un second bord opposé (815),
un élément opposable (470) disposé à proximité de la lame (243) et présentant un premier bord (811) et un second bord opposé (812), et
un actionneur opposable (525) pour maintenir l'élément opposable (470),

dans lequel l'élément opposable (470) forme un espace capillaire entre l'élément opposable (470) et la lame (243), le premier bord (811) de l'élément opposable (470) étant plus près de la première paroi latérale (682) que le premier bord (813) de la lame (243), et le second bord (812) de l'élément opposable (470) étant plus près de la seconde paroi latérale (682) que le second bord (815) de la lame (243),
dans lequel une largeur $W_{G1}$ d'un premier espace (819) entre le premier bord (811) de l'élément opposable (470) et la première paroi latérale (682) est plus petite que la distance $D_1$ entre le premier bord (811) de l'élément opposable (470) et le premier bord (813) de la lame (243), et une largeur $W_{G2}$ d'un second espace (817) entre le second bord (812) de l'élément opposable (470) et la seconde paroi latérale (682) est plus petite que la distance $D_2$ entre le second bord (812) de l'élément opposable (470) et le second bord (815) de la lame (243), **caractérisé en ce que** la lame (243) s'étend vers l'extérieur à partir de la région de réception de lame (680).

2. Appareil de traitement à lame selon la revendication 1, comprenant en outre:

un distributeur (622) positionné de manière à distribuer un liquide supplémentaire (802) entre l'élément opposable (470) et la lame (243) pendant qu'un liquide (802) est maintenu dans l'espace capillaire, et
un dispositif de commande (144) couplé de façon communicante au distributeur (622) et programmé pour commander le distributeur (144) de telle sorte que le distributeur (622) distribue le liquide supplémentaire (802) dans le but de maintenir un volume du liquide (802) entre l'élément opposable (470) et la lame (243) à l'intérieur d'une plage de volume d'équilibre.

3. Appareil de traitement à lame selon la revendication 1, dans lequel la largeur $W_{G1}$ du premier espace (819) est inférieure à 50 % de la distance entre la première paroi latérale (682) et le premier bord (813) de la lame (243).

4. Appareil de traitement à lame selon la revendication 3, dans lequel la largeur $W_{G2}$ du second espace (817) est inférieure à 50 % de la distance entre la seconde paroi latérale (682) et le second bord (815) de la lame (243).

5. Appareil de traitement à lame selon la revendication 1, dans lequel le module de coloration comprend au moins un élément chauffant (653) qui est positionné de manière à chauffer par conduction la première paroi latérale (682), la seconde paroi latérale (682), ou les deux.

6. Système de traitement d'un échantillon (807) porté par une lame (243), comprenant:

   une station de traitement d'échantillons, comprenant:

   un appareil de traitement à lame selon la revendication 1 pour traiter un échantillon (807) porté par une lame (243), dans lequel une plaque de support de lame (601) comprend une région de support de lame, la plaque de support de lame (601) étant configurée de manière à chauffer un liquide sur une lame (243) au niveau de la région de support de lame (650) pendant qu'un élément opposable (470) maintenu par un actionneur opposable (525) entre en contact avec et déplace le liquide (802) le long de la lame (243), et
   un dispositif de réapprovisionnement configuré de manière à distribuer un liquide supplémentaire (802) entre l'élément opposable et la lame (243); et
   un dispositif de commande (144) programmé pour commander la station de traitement d'échantillons de telle sorte que le dispositif de réapprovisionnement distribue le liquide supplémentaire (802) à un débit de réapprovisionnement afin de compenser les pertes par évaporation du liquide (802), dans lequel le dispositif de commande (144) est programmé pour commander la station de traitement d'échantillons pour déplacer l'élément opposable (470) pendant que l'élément opposable (470) vient en contact avec le liquide (802) sur la lame (243).

7. Système selon la revendication 6, dans lequel le dispositif de commande (144) comprend:

   une mémoire (629) pour stocker une première séquence d'instructions de programme et une seconde séquence d'instructions de programme; et
   un processeur programmable (631) configuré de manière à exécuter la première séquence d'instructions de programme dans le but de traiter un échantillon (807) sur la lame (243) avec un premier liquide (802), et configuré de manière à exécuter la seconde séquence d'instructions de programme pour traiter l'échantillon (807) avec un second liquide (802) qui est différent du premier liquide (802).

8. Système selon la revendication 7, dans lequel le processeur programmable (631) est configuré de manière à exécuter la première séquence d'instructions de programme dans le but de chauffer la lame (243) à une première température en utilisant la plaque de support de lame (601), le dispositif de commande (144) est configuré de manière à exécuter la seconde séquence d'instructions de programme dans le but de chauffer la lame (243) à une seconde température en utilisant la plaque de support de lame (601), et la seconde température est différente de la première température.

9. Système selon la revendication 6, dans lequel le dispositif de commande (144) est configuré de manière à exécuter une première séquence d'instructions de programme pour commander au dispositif de réapprovisionnement de distribuer un premier liquide (802) à la lame (243) à un premier débit, et le dispositif de commande (144) est configuré de manière à exécuter une seconde séquence d'instructions de programme pour commander au dispositif de réapprovisionnement de distribuer un second liquide (802) à la lame (243) à un second débit qui est différent du premier débit.

10. Système selon la revendication 9, dans lequel le premier débit correspond à un débit d'évaporation du premier liquide (802), et le second débit correspond à un débit d'évaporation du second liquide (802).

11. Système selon la revendication 6, dans lequel le système de commande (144) comprend une mémoire (629) qui stocke un programme de réapprovisionnement exécutable par le dispositif de commande (144) dans le but de maintenir un volume du liquide sur la lame (243) à l'intérieur d'une plage de volume d'équilibre.

**12.** Système selon la revendication 11, dans lequel le dispositif de commande (144) est programmé pour commander la station de traitement d'échantillons dans le but de maintenir un volume du liquide (802) entre une volume d'équilibre maximum, qui correspond à une condition de sur-humidification, et une condition d'équilibre minimum, qui correspond à une condition de sous-humidification.

**13.** Système selon la revendication 6, dans lequel le dispositif de commande (144) est programmé de manière à commander la station de traitement d'échantillons pour:

déplacer un volume du liquide (802) à travers un échantillon (807) maintenu sur la lame (243) en déplaçant un élément opposable (470) maintenu par l'actionneur opposable (525) par rapport à la lame (243); et

distribuer le liquide supplémentaire (802) à partir du dispositif de réapprovisionnement dans le but de compenser généralement une diminution du volume du liquide (802) due à l'évaporation.

**14.** Système selon la revendication 6, dans lequel le dispositif de commande (144) est configuré de manière à recevoir une information de débit d'évaporation de référence pour le liquide (802) en provenance d'une mémoire (629) et pour commander la station de traitement d'échantillons sur la base de l'information de débit d'évaporation de référence.

**15.** Système selon la revendication 6, dans lequel le dispositif de commande (144) est programmé pour commander la station de traitement d'échantillons de telle sorte que le dispositif de réapprovisionnement fournisse le liquide supplémentaire (802) à un débit qui est sélectionné sur la base d'un débit d'évaporation du liquide (802).

**16.** Système selon la revendication 6, dans lequel un profil de température le long d'une surface de contact (649) de l'élément de support (650) est différent du profil de température le long d'une surface supérieure (687) de la lame (243).

**17.** Procédé de traitement d'un échantillon (807) sur une lame (243), le procédé comprenant l'utilisation du système selon la revendication 6 pour traiter un échantillon (807) porté par une lame (243), le procédé comprenant en outre:

déplacer un liquide (802) le long d'une lame (243) en utilisant un élément opposable (470) en contact avec le liquide (802);

commander une température du liquide (802) sur la lame (243) tout en déplaçant le liquide (802);

évaluer au moins une valeur parmi un volume du liquide (802) et un débit d'évaporation total du liquide (802); et

distribuer un liquide supplémentaire (802) sur la lame (243) sur la base de l'évaluation dans le but de maintenir un volume du liquide (802) sur la lame (243) à l'intérieur d'une plage de volume d'équilibre.

**18.** Procédé selon la revendication 16, dans lequel l'évaluation de ladite au moins une valeur parmi le volume du liquide (802) et/ou le débit d'évaporation total du liquide (802) comprend la réception du volume du liquide (802) et du débit d'évaporation total du liquide (802) en provenance d'une mémoire (629).

**FIG.1**

**FIG.2**

**FIG.3**

**FIG.4**

**FIG.5**

**FIG.6**

**FIG.7**

**FIG.8**

**FIG.9**

**FIG.10**

**FIG.11**

**FIG.12**

**FIG.13**

**FIG.14**

**FIG.15**

41

**FIG.16**

*FIG.17*

**FIG.18**

**FIG.19**

**FIG.20**

**FIG.21A**

**FIG.21B**

**_FIG.22_**

**FIG.23**

**FIG.24A**

**FIG.24B**

**FIG.25**

**FIG.26**

**FIG.27**

*FIG.28*

*FIG.28A*

*FIG.28B*

*FIG.28C*

**FIG.29**

**FIG.30**

**FIG.31**

**_FIG.32_**

**_FIG.33_**

FIG.34A

FIG.34B

FIG.35A

FIG.35B

FIG.36A

FIG.36B

FIG.37A

FIG.37B

FIG.38A

FIG.38B

EP 2 938 436 B1

*FIG.39*

*FIG.40*

*FIG.41*

*FIG.42*

56

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011060387 A1
- US 2010031757 A1
- WO 2011139978 A1
- US 5281516 A
- US 5338358 A
- US 2006019302 A1
- US 2011305842 A1
- WO 2010074915 A2
- US 2006148063 A1
- US 509785 A
- US 157231 A
- US 7468161 B
- US 2010056752 W
- US 8296809 B